(19) Europäisches Patentamt European Patent Office Office européen des brevets

(11) **EP 4 242 410 A2**

(12) **EUROPEAN PATENT APPLICATION**

(43) Date of publication:
**13.09.2023   Bulletin 2023/37**

(21) Application number: **23188301.8**

(22) Date of filing: **28.03.2019**

(51) International Patent Classification (IPC):
***E06B 3/67*** (2006.01)

(52) Cooperative Patent Classification (CPC):
**C03C 17/3681; C03C 17/36; C03C 17/3644;
C03C 17/366; E06B 3/6715; G02B 5/282;
G02B 5/288;** C03C 2218/365

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2018   US 201862649808 P**

(62) Document number(s) of the earlier application(s) in
accordance with Art. 76 EPC:
**19722262.3 / 3 774 685**

(71) Applicant: **Corning Incorporated
Corning, New York 14831 (US)**

(72) Inventors:
• **BERTIN-MOUROT, Thomas
75015 Paris (FR)**

• **BORRELLI, Nicholas Francis
Elmira, 14905 (US)**
• **TEN, Sergey Yurevich
Corning, 14830 (US)**
• **Zinger, Yuval
5591897 Ganey Tikvah (IL)**

(74) Representative: **Epping - Hermann - Fischer
Patentanwaltsgesellschaft mbH
Schloßschmidstraße 5
80639 München (DE)**

Remarks:
This application was filed on 28.07.2023 as a
divisional application to the application mentioned
under INID code 62.

(54) **ENERGY-EFFICIENT, MICROWAVE-TRANSPARENT WINDOW COMPATIBLE WITH PRESENT DESIGN**

(57)     A window structure includes first, second, and third glass layers. The third glass layer is positioned between the first and second glass layers. First and second low thermal emissivity coatings are on respective first and second opposing surfaces of the third glass layer to form a Fabry-Perot etalon that is configured as a bandpass filter having a designated frequency passband that includes at least one frequency in a range of frequencies from 6 gigahertz to 80 gigahertz.

FIG. 2

EP 4 242 410 A2

**Description**

CROSS-REFERENCE TO RELATED APPLICATIONS

This application claims the benefit of priority under 35 U.S.C. § 119 of U.S. Provisional Application No. 62/649,808, filed March 29, 2018, the content of which is incorporated herein by reference in its entirety.

BACKGROUND

Recent innovations in window design have led to windows having greater energy efficiency. Modern windows often include multiple sheets (e.g., panes) of glass. Each sheet may include a single layer of glass or multiple layers of glass that are attached using an adhesive. The energy efficiency of such windows may be increased by covering a surface of at least one of the sheets with a low thermal emissivity coating (a.k.a. low-E coating) and/or by filling a space between the sheets with an inert gas having relatively low thermal conductivity. Each low-E coating manages electromagnetic (EM) radiation that is incident on the coating.

Low-E coatings often are metallic. For instance, silver is commonly used as a low-E coating. Accordingly, low-E coatings typically reflect frequencies that are used in cellular communications in addition to infrared frequencies that are intended to be blocked for greater energy efficiency. A low-E coating may attenuate radio waves having a frequency of greater than 1.0 GHz up to 40dB. Building materials typically allow frequencies in the range of 0.6 gigahertz (GHz) to 2.7 GHz, which are used by 3G and 4G cellular systems, to pass through. Thus, attenuations of 3G and 4G frequencies by low-E coatings in windows traditionally has not been a significant issue. However, the same building materials typically do not allow frequencies in the range of 6 GHz to 100 GHz, which are used by 5G systems, to pass through. Accordingly, 5G systems often require line of sight (LOS) to a receiver due to relatively low penetration through walls, foliage, etc.

It was initially believed that windows would be sufficiently transparent to frequencies in the 5G spectrum that customer premise equipment (CPE) could be placed near the interior surface of the windows to enable the CPE to communicate via such frequencies. However, the realization that windows often are coated with a metallic layer may lead to higher cost solutions, such as placing an external antenna outside a structure in which the CPE is located. However, if an antenna is placed outside, a coaxial cable is likely to be used for routing signals in and out of the structure (e.g., between the CPE and the antenna). Coaxial cable is known to have relatively high losses at carrier frequencies within the 5G spectrum. Thus, an outside unit is likely to include the antenna and a receiver to convert centimeter-wave and millimeter-wave signals into baseband signals and to transmit them through an interconnect that may carry up to several gigabits-per-second (Gb/s) data rates. Placing such a unit outside may cause challenges with cable routing, powering the unit, and bringing the cable inside the structure.

SUMMARY

Various window structures are described herein that are configured to provide energy efficiency and microwave transparency. Each of these window structures includes a Fabry-Perot etalon. One example implementation of a Fabry-Perot etalon includes a transparent layer having reflecting surfaces. In accordance with this implementation, the transparent layer may be glass, and the reflective surfaces may be formed using low-E coating(s).

A first example window structure includes first, second, and third glass layers. The third glass layer is positioned between the first and second glass layers. The first example window structure further includes first and second low-E coatings on respective first and second opposing surfaces of the third glass layer to form a Fabry-Perot etalon that is configured as a bandpass filter having a designated frequency passband that includes at least one frequency in a range of frequencies from 6 gigahertz to 80 gigahertz.

A second example window structure includes first, second, and third glass layers. Each of the first and second glass layers includes a soda-lime glass. The third glass layer has a first face and a second face, a thickness of less than 2.5 millimeters (mm), a thickness variation of less than 10 micrometers ($\mu$m), and a dielectric loss tangent of less than 0.01. The third glass layer is positioned between the first and second glass layers to form a first cavity between the first glass layer and the third glass layer. The second example window structure further includes a first coating on the first face of the third glass layer and a second coating on the second face of the third glass layer. The first and second coatings include respective reflective low-emissive coatings. The third glass layer in combination with the first and second coatings form a Fabry-Perot etalon that is configured as a bandpass filter having a designated frequency passband that includes at least one frequency in a range of frequencies from 20 gigahertz to 80 gigahertz.

In an example method of using a window structure having first, second, and third glass layers, infrared radiation is received at a Fabry-Perot etalon, which is formed by the third glass layer and further by first and second low-E coatings on respective first and second opposing surfaces of the third glass layer, via the first glass layer. The infrared radiation is attenuated using the first and second low-E coatings. A signal having a frequency in a range of frequencies from 6 gigahertz to 80 gigahertz is received at the Fabry-Perot etalon via the first glass layer. The signal is passed through the bandpass filter and the third glass layer based at least in part on the bandpass filter having a designated frequency passband that includes the frequency.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.

FIG. 1 is an example plot of loss tangent with respect to frequency for soda-lime glass and EXG™ glass in accordance with an embodiment.

FIG. 2 shows a cross-section of an example triple-pane window structure that includes a Fabry-Perot etalon in accordance with an embodiment.

FIGS. 3-4 show cross-sections of example double-pane window structures that include Fabry-Perot etalons in accordance with embodiments.

FIG. 5 is a cross-section of an example Fabry-Perot etalon with normal angle of incidence of a microwave signal in accordance with an embodiment.

FIG. 6 is a plot of an example transmission spectrum of a Fabry-Perot etalon shown in FIG. 5 as a function of frequency in accordance with an embodiment.

FIG. 7 is an example plot showing thickness of the soda-lime glass (SLG) and EXG™ glass that is required to tune resonance to a target frequency in accordance with an embodiment.

FIG. 8 is an example plot showing maximum shield effectiveness of SLG and EXG™ glass as a function of coating reflectivity in accordance with an embodiment.

FIG. 9 is an example plot showing an influence of angle of incidence on shielding effectiveness for a variety of coating reflectivities in accordance with an embodiment.

FIG. 10 is a cross-section of an example Fabry-Perot etalon for which an angle of incidence of a microwave signal is not normal in accordance with an embodiment.

FIG. 11 is an example plot showing transmission of EXG™ glass having a thickness of 2.33 mm (optimized for 28 GHz) at a variety of incidence angles in accordance with an embodiment.

FIG. 12 is an example plot showing transmission as a function of frequency for an EXG™ glass layer having a thickness of 50 $\mu$m in accordance with an embodiment.

FIG. 13 is an example plot showing transmission as a function of frequency for a Fabry-Perot etalon that includes an EXG™ glass layer having a thickness of 50 $\mu$m with low emissivity coatings on opposing surfaces of the EXG™ glass layer in accordance with an embodiment.

FIG. 14 is an example plot showing transmission of an EXG™ glass layer at a target frequency of 28 GHz as a function of angle of incidence for a range of glass thicknesses in accordance with an embodiment.

FIG. 15 an example plot showing filter response of a Fabry-Perot etalon across a range of glass thicknesses at a target frequency of 28 GHz in accordance with an embodiment.

FIG. 16 an example plot showing filter response of a Fabry-Perot etalon across a range of glass thicknesses at a target frequency of 60 GHz in accordance with an embodiment.

FIG. 17 depicts a flowchart of an example method for using a window structure having first, second, and third glass layers in accordance with an embodiment.

FIG. 18 is a diagram of an example microwave link in accordance with an embodiment.

FIG. 19 is an example plot of free space propagation loss with respect to distance for a variety of frequencies in accordance with an embodiment.

FIG. 20 is an example table of some common modulation formats that are used in 5G links, along with corresponding maximum spectral efficiencies and minimum required signal-to-noise ratios (SNR) at the receiver, in accordance with an embodiment.

FIG. 21 is an example plot of receiver power with respect to distance from a transmitting antenna for several example windows in accordance with an embodiment.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

DETAILED DESCRIPTION

I. Introduction

The following detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

II. Example Embodiments

Example window structures described herein are configured to provide energy efficiency and microwave transparency. Each of these window structures includes a Fabry-Perot etalon. One example implementation of a Fabry-Perot etalon includes a transparent layer having reflecting surfaces. In accordance with this implementation, the transparent layer may be glass, and the reflective surfaces may be formed using low-E coating(s).

Example window structures described herein have a variety of benefits as compared to conventional window structures. For instance, the example window structures may provide a relatively high energy efficiency (e.g., by attenuating infrared frequencies) while enabling at least some microwaves frequencies (e.g., 5G frequencies) to pass through. For example, a structural design of an otherwise standard triple-pane or double-pane window may be used with as little change as possible and yet provide microwave transmission at 5G frequencies. Such microwave transmission may be provided while maintaining the full required infrared reflectivity. The example window structures may be capable of being fabricated using existing window processing techniques, and the Fabry-Perot etalon may be compatible with existing window structures.

The middle pane of a triple-pane window may be fabricated to include a Fabry-Perot etalon that functions as a microwave band passband filter, or a relatively thin layer of glass that includes such a Fabry-Perot etalon may be added to one of the panes of a double-pane window. The Fabry-Perot can be formed using a glass layer having infrared-reflecting coatings on both of its faces. The Fabry-Perot etalon may be fabricated to have relatively low loss and to maintain a relatively low thickness variation of the glass layer over an entirety of a window to enable the coatings to act as mirrors for a resulting passband filter having a passband that includes one or more desired microwave frequency (e.g., a range of microwave frequencies). The glass layer in the Fabry-Perot etalon may be low-alkali (e.g., less than 10 mol% alkali content) or alkali-free, though the scope of the example embodiments is not limited in this respect.

One type of glass that may be used to form a Fabry-Perot etalon in the window structures described herein is Eagle XG (EXG™) glass, which is made and distributed by Corning Inc. EXG™ glass is referenced throughout this document for illustrative purposes and is not intended to be limiting. For instance, the performance of EXG™ glass is repeatedly contrasted with the performance of soda-lime glass (SLG) for non-limiting, illustrative purposes merely to show performance improvements that may be achieved using glass materials that differ from SLG. It will be recognized that any suitable type of glass may be used in combination with or in lieu of EXG™ glass in any of the window structures described herein. Moreover, any of the glass layers described herein may be fabricated to have any one or more of the properties associated with EXG™ glass or none of the properties associated with EXG™ glass.

The glass that is used to form the Fabry-Perot etalons described herein may exhibit a relatively low inherent loss for centimeter waves and/or millimeter waves. For example, EXG™ glass may have a dielectric loss tangent that is approximately nine or ten times lower than the loss tangent of SLG (e.g., at 28 GHz, 37 GHz, 39 GHz, and/or 60 GHz).

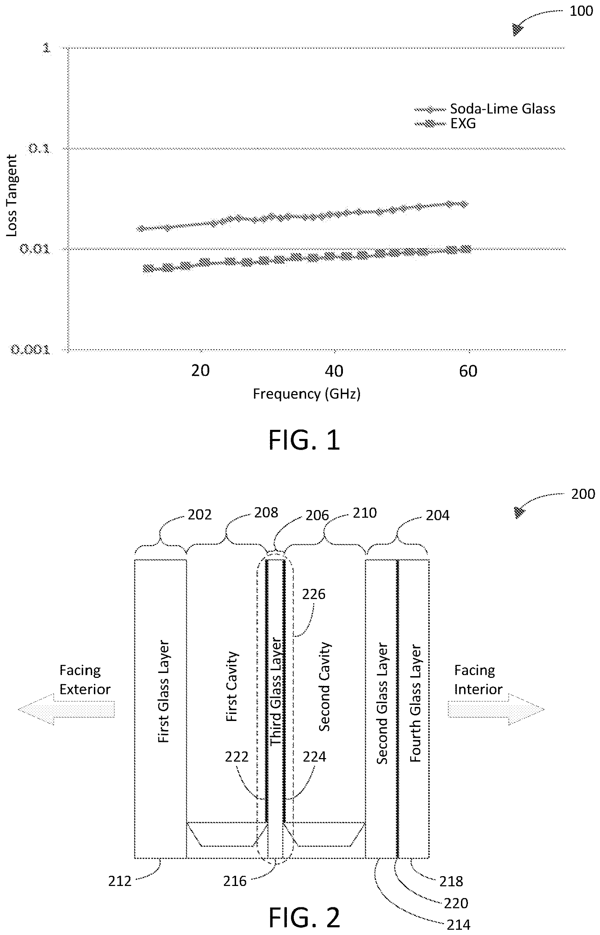

In another example, the loss tangent may be less than or equal to 0.01, 0.008, or 0.006 for a targeted frequency or a range of targeted frequencies. FIG. 1 is an example plot 100 of loss tangent with respect to frequency for soda-lime glass and EXG™ glass in accordance with an embodiment. As shown in FIG. 1, the loss tangent of EXG™ glass is substantially less than the loss tangent of SLG across the frequency band depicted in FIG. 1. For instance, the loss tangent of EXG™ glass is shown to be less than or equal to 0.01 across the frequency band.

The glass that is used to form the Fabry-Perot etalons described herein may have a relatively low thickness variation (e.g., less than 10 $\mu$m or less than 20 $\mu$m). For instance, a fusion process may be used to fabricate the glass to maintain a desired thickness tolerance across an entire sheet of the glass. The fusion process heats raw materials (e.g., pure sand and other inorganic materials) to provide high-purity molten glass, which is formed into a sheet. For example, the raw material may flow into a melting tank where the raw materials are heated (e.g., well above 1000 degrees Celsius) to provide the molten glass. The molten glass may be homogenized and conditioned before it is released into a collection trough with a V-shaped bottom, known as an isopipe. The isopipe may be heated to manage the viscosity of the mixture and maintain uniform flow. The molten glass may flow evenly over the top edges of the isopipe, forming two thin, sheet-like streams along the outer surfaces of the isopipe. The two sheets meet at the V-shaped bottom point of the isopipe and fuse into a single sheet. The sheet, still attached to the bottom of the isopipe, may feed into drawing equipment as it lengthens and begins to cool in midair. The sheet is cooled and stabilized until it reaches the bottom of the draw, where it may be cut and moved to another area to complete processing and packaging. Using the fusion process may eliminate a need to grind and polish the glass in order to achieve the desired thickness tolerance.

The glass that is used to form the Fabry-Perot etalons described herein may have a relatively low dielectric constant. For instance, the dielectric constant may be less than five or less than six. The glass may have a relatively low surface flatness variation. The glass may be strong, cost effective, and/or serve as an excellent substrate for a Fabry-Perot insert design having microwave passband properties. The glass may have a relatively low coefficient of thermal expansion (CTE). For instance, glass may have a CTE of approximately $3 \times 10^{-8}$ /°K, as compared to $9 \times 10^{-8}$ /°K for SLG. The relatively low CTE may enable the glass to withstand thermal edge stresses in the field; whereas a thin piece of SLG may need to be thermal strengthened, which is not possible with incumbent tempering technologies for SLG having a thickness of less than 2.5 mm. The glass may have substantially better optical properties than SLG, which may enhance window g-value and/or visible light transmission. The glass may be thinner than glass layers that are traditionally used in window structures, which may reduce the weight of such window structures and/or increase the width of any cavities that are formed between the glass and other glass layers (e.g., thereby improving solar performance). Conventional coatings may be used to form the Fabry-Perot etalon, which may facilitate maintaining a relatively low cost for the window structure.

Some example benefits are described in further detail in the following discussion.

FIG. 2 shows a cross-section of an example triple-pane window structure 200 that includes a Fabry-Perot etalon 226 in accordance with an embodiment. As shown in FIG. 2, the window structure 200 includes a first pane 202, a second pane 204, and a third pane 206. The third pane 206 is positioned between the first pane 202 and the second pane 204. A first cavity 208 is formed between the first pane 202 and the third pane 206. A second cavity 210 is formed between the second pane 204 and the third pane 206. Each of the first and second cavities 208 and 210 may be filled with a gas (e.g., an inert gas). The gas may have a relatively low thermal conductivity (e.g., less than 20 milliwatts per meter K (mW / m K) at 300 K) to help increase energy efficiency of the window structure 200. For instance, the gas may be Argon, which is known to have a thermal conductivity of 18 mW / m K at 300 K. Each of the first and second cavities 208 and 210 may be sealed.

The first pane 202 includes a first glass layer 212. The second pane 204 includes a second glass layer 214 and a fourth glass layer 218, which are attached using an adhesive 220. The adhesive 220 may be polyvinyl butyral, for example. The third pane 206 includes a third glass layer 216. The third glass layer 216 has first and second opposing surfaces, which face the respective first and second cavities 208 and 210. A first low-E coating 222 is on the first surface of the third glass layer 216. A second low-E coating 224 is on the second surface of the third glass layer 216.

The first low-E coating 222, the second low-E coating 224, and the third glass layer 216 combine to form the Fabry-Perot etalon 226, which is configured as a bandpass filter. The bandpass filter has a designated frequency passband that includes at least one microwave frequency (e.g., a range of microwave frequencies). Example implementations of a Fabry-Perot etalon, such as the Fabry-Perot etalon 226, and their properties are discussed in further detail below.

It should be noted that a low-E coating may be placed on a surface of the first glass layer 212 that faces the first cavity 208 and/or a surface of the second glass layer 214 that faces the second cavity 210, though the scope of the example embodiments is not limited in this respect.

The first pane 202 is shown in FIG. 2 to face an exterior of an object on which the window structure 200 is to be installed, and the second pane 204 is shown to face an interior of the object, for illustrative, non-limiting purposes. Accordingly, the first glass layer 212 may be said to face the exterior of the object. The second glass layer 214 and/or the third glass layer 216 may be said to face the interior of the object. Examples of an object on which the window structure 200 may be installed include but are not limited to a commercial building, a residential building, a train, a car, a coach, a boat, a truck, an industrial vehicle, an airplane, a helicopter, and a ski lift. In an alternative embodiment, the first pane 202 faces the interior of the object, and the second pane 204 faces the exterior of the object.

In an example embodiment, the window structure 200 is formed by replacing the middle glass sheet in a conventional triple-pane window with high precision thickness glass made with EXG™ glass with standard low E-coatings deposited on respective sides of the glass. In accordance with this embodiment, the thickness of the EXG™ glass together with specific reflectivity values of the low-E coatings on the respective sides of the glass are designed to create the Fabri-Perot cavity 226 to form the pass band filter around one or more targeted frequencies (e.g., around 28 GHz).

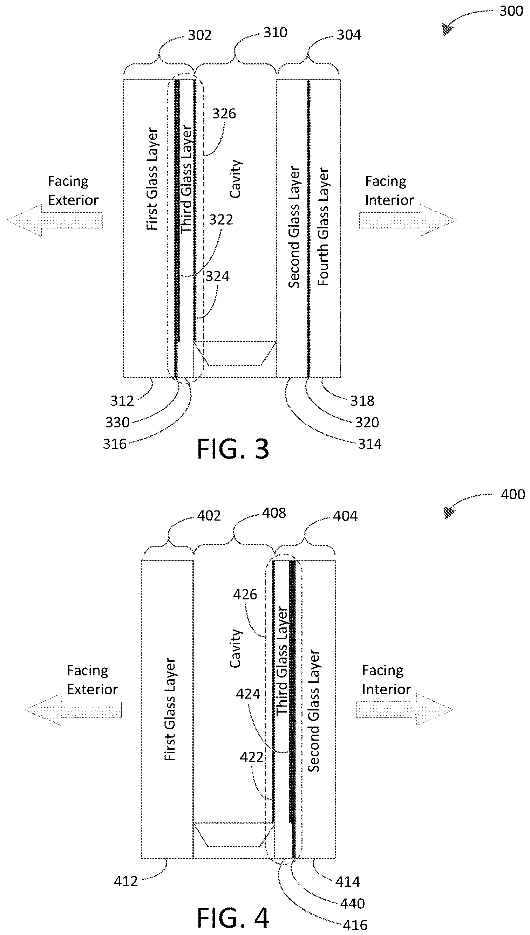

FIGS. 3-4 show cross-sections of example double-pane window structures 300 and 400 that include Fabry-Perot etalons 326 and 426 in accordance with embodiments. As shown in FIG. 3, the window structure 300 includes a first pane 302 and a second pane 304. A cavity 310 is formed between the first pane 302 and the second pane 304. The cavity 310 may be filled with a gas and/or sealed.

The first pane 302 includes a first glass layer 312 and a third glass layer 316. The third glass layer 316 has first and second opposing surfaces. The second surface of the third glass layer 316 faces the cavity 310. A first low-E coating 322 is on the first surface of the third glass layer 316. A second low-E coating 324 is on the second surface of the third glass layer 316.

The first low-E coating 322, the second low-E coating 324, and the third glass layer 316 combine to form the Fabry-Perot etalon 326, which is configured as a bandpass filter. The bandpass filter has a designated frequency passband that includes at least one microwave frequency (e.g., a range of microwave frequencies). Example implementations of a Fabry-Perot etalon, such as the Fabry-Perot etalon 326, and their properties are discussed in further detail below. The Fabry-Perot etalon 326 and the first glass layer 312 are attached using an adhesive 330. Accordingly, the first glass layer 312 is adhered to the first thermal emissivity coating 322. The second pane 304 includes a second glass layer 314 and a fourth glass layer 318, which are attached using an adhesive 320. Each of the adhesives 320 and 330 may be polyvinyl butyral, for example.

It should be noted that a low-E coating may be placed on a surface of the second glass layer 314 that faces the cavity 310, though the scope of the example embodiments is not limited in this respect.

The first pane 302 is shown in FIG. 3 to face an exterior of an object on which the window structure 300 is to be installed, and the second pane 304 is shown to face an interior of the object, for illustrative, non-limiting purposes. Accordingly, the first glass layer 312 may be said to face the exterior of the object. The second glass layer 314 and/or the fourth glass layer 318 may be said to face the interior of the object.

In an example embodiment, the window structure 300 is formed by attaching a layer of EXG™ glass, which has standard low E-coatings deposited on respective sides of the glass, to an outer pane of a conventional double-pane window. In accordance with this embodiment, the thickness of the EXG™ glass together with specific reflectivity values of the low-E coatings on the respective sides of the glass are designed to create the Fabri-Perot cavity 326 to form the pass band filter.

As shown in FIG. 4, the window structure 400 includes a first pane 402 and a second pane 404. A cavity 408 is formed between the first pane 402 and the second pane 404. The cavity 408 may be filled with a gas and/or sealed.

The first pane 402 includes a first glass layer 412. The second pane 404 includes a second glass layer 414 and a third glass layer 416. The third glass layer 416 has first and second opposing surfaces. The first surface of the third glass layer 416 faces the cavity 408. A first low-E coating 422 is on the first surface of the third glass layer 416. A second low-E coating 424 is on the second surface of the third glass layer 416.

The first low-E coating 422, the second low-E coating 424, and the third glass layer 416 combine to form the Fabry-Perot etalon 426, which is configured as a bandpass filter. The bandpass filter has a designated frequency passband that includes at least one microwave frequency (e.g., a range of microwave frequencies). Example implementations of a Fabry-Perot etalon, such as the Fabry-Perot etalon 426, and their properties are discussed in further detail below. The Fabry-Perot etalon 426 and the second glass layer 414 are attached using an adhesive 440. Accordingly, the second glass layer 414 is adhered to the second thermal emissivity coating 424. The adhesive 440 may be polyvinyl butyral, for example.

It should be noted that a low-E coating may be placed on a surface of the first glass layer 412 that faces the cavity 408, though the scope of the example embodiments is not limited in this respect.

The first pane 402 is shown in FIG. 4 to face an exterior of an object on which the window structure 400 is to be installed, and the second pane 404 is shown to face an interior of the object, for illustrative, non-limiting purposes. Accordingly, the first glass layer 412 may be said to face the exterior of the object. The second glass layer 414 may be said to face the interior of the object.

In an example embodiment, the window structure 400 is formed by attaching a layer of EXG™ glass, which has standard low E-coatings deposited on respective sides of the glass, to an inner pane of a conventional double-pane window.

The first low-E coating 222, 322, 422 shown in respective FIGS. 2-4 may have a first reflectivity with regard to infrared wavelengths. The second low-E coating 224, 324, 424 shown in respective FIGS. 2-4 may have a second reflectivity with regard to infrared wavelengths. The first and second low-E coatings 222 and 224, 322 and 324, 422 and 424 may be selected such that an average of the first reflectivity and the second reflectivity is at least a threshold percentage. The threshold percentage may be 85%, 90%, 95%, or other suitable percentage.

The third glass layer 206, 306, 406 shown in respective FIGS. 2-4 may be fabricated using a fusion process, though the example embodiments are not limited in this respect. Relatively low thickness variation and relatively high flatness may be inherent characteristics of the fusion process. Accordingly, utilizing the fusion process may obviate a need to grind and polish the glass, which are customary steps in conventional glass fabrication processes.

The designated frequency passband of any of the bandpass filters formed by the Fabry-Perot etalons 226, 326, and 426 mentioned above with reference to FIGS. 2-4 may include at least one frequency in a range of frequencies from 6 GHz to 80 GHz. For instance, the designated frequency passband may include at least one frequency in a range of frequencies from 20 GHz to 80 GHz, from 28 GHz to 80 GHz, or from 28 GHz to 60 GHz. Accordingly, the designated frequency passband may include 28 GHz, 37 GHz, 39 GHz, and/or 60 GHz. In an example implementation, the designated frequency passband includes a range of frequencies from 28 GHz to 60 GHz. In another example implementation, the designated frequency passband includes a range of frequencies from 6 GHz to 80 GHz. In an example embodiment, at least one of the Fabry-Perot etalons 226, 326, or 426 is configured to enable a signal that has a frequency in the range from 6 GHz to 80 GHz to have an attenuation, which results from the signal traveling at least 100 meters and passing through the respective window structure 200, 300, or 400, of less than or equal to 70dB.

It should be noted that the thickness of the third glass layers 206, 306, and 406 in the respective Fabry-Perot etalons 226, 326, and 426 may be chosen based on which design criteria are most important for a given use case. For example, having a relatively thicker third glass layer 206, 306, 406 (e.g., in a range from 0.5 mm to 3.0 mm, or from 0.5 mm to 2.5 mm) may result in the Fabry-Perot etalon 226, 326, 426 having greater transmissivity (e.g., $\geq$ 90%), though the Fabry-Perot etalon 226, 326, 426 may be more susceptible to incidence angle variations and have a narrower passband. For instance, the third glass layer 206, 306, 406 may be at least nine times or ten times more transmissive than soda-lime glass with regard to at least one frequency in the passband (e.g., at least one of 28 GHz, 37 GHz, 39 GHz, or 60 GHz). Accordingly, a relatively thicker third glass layer 206, 306, 406 may be more suitable for line-of-sight applications in which the angle of incidence of the targeted waveforms is near normal to the first and/or second surface(s) of the third glass layer 206, 306, 406 (e.g., less than a threshold angle of 10 degrees or 20 degrees with reference to normal). A relatively thicker third glass layer 206, 306, 406 may be more suitable for applications that require relatively greater transmissivity or that pertain to a relatively narrow band of frequencies.

In some example embodiments that utilize a thicker third glass layer 206, 306, 406, the Fabry-Perot etalon 206, 306, 406 may be configured such that a product of (a) a square of a permeability of the third glass layer 206, 306, 406 at a designated frequency in the passband and (b) a thickness of the third glass layer 206, 306, 406 equals approximately one-half of a wavelength that corresponds to a central frequency of the bandpass filter (or an integer multiple thereof). In some example embodiments, the third glass layer 206, 306, 406 has a thickness equal to an integer multiple of approximately 1.2 mm (e.g., for a target frequency of 60 GHz), approximately 1.7 mm (e.g., for a target frequency of 39 GHz), approximately 1.8 mm (e.g., for a target frequency of 37 GHz), or approximately 2.5 mm (e.g., for a target frequency of 28 GHz).

On the other hand, having a relatively thinner third glass layer 206, 306, 406 (e.g., in a range from 10 $\mu$m to 500 $\mu$m, or from 20 $\mu$m to 200 $\mu$m, or from 50 $\mu$m to 100 $\mu$m) may result in the Fabry-Perot etalon 226, 326, 426 being less affected by incidence angle and having a wider passband, though the Fabry-Perot etalon 226, 326, 426 may have less transmissivity (e.g., $\leq$ 10%). For instance, the Fabry-Perot etalon 226, 326, 426 may be unaffected by (e.g., agnostic to) the angle of incidence for frequencies in the passband of the bandpass filter. Accordingly, a relatively thinner third glass layer 206, 306, 406 may be more suitable for applications in which the angle of incidence of the targeted waveforms varies substantially or in which the targeted frequencies cover a substantial portion (e.g., all) of the 5G frequency range (e.g., 28 GHz - 60 GHz or broader).

Regardless of the thickness of the third glass layer 206, 306, 406, the third glass layer 206, 306, 406 may be fabricated to have a thickness variation that is less than a threshold variation. For instance, the thickness of the third glass layer 206, 306, 406 may vary no more than 20 $\mu$m or no more than 10 $\mu$m. By controlling the thickness variation of the third glass layer 206, 306, 406, the variation of a central frequency of the bandpass filter may be controlled. For example, the third glass layer 206, 306, 406 may be configured to cause the central frequency of the bandpass filter to vary less than 1.0% or less than 0.5%.

It will be recognized that each of the window structures 200, 300, and 400 shown in FIGS. 2-4 may not include one or more of the components shown therein. Furthermore, each of the window structures 200, 300, and 400 may include components in addition to or in lieu of the components shown therein. For instance, any of the window structures 200, 300, and 400 may include one or more additional glass layers, low-E coatings, cavities, gases filling the cavities, adhesives, and so on.

Technical aspects of some example embodiments will now be discussed in greater detail. Embodiments in which the third glass layer 206, 306, 406 is relatively thick will be discussed first, followed by embodiments in which the third glass layer 206, 306, 406 is relatively thin.

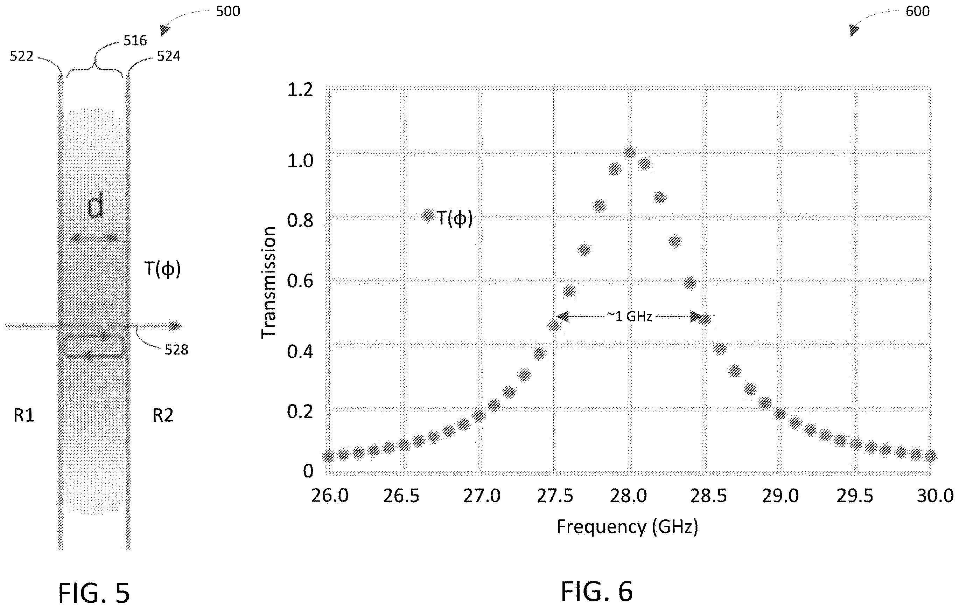

FIG. 5 is a cross-section of an example Fabry-Perot etalon 500 with normal angle of incidence of a microwave signal 528 in accordance with an embodiment. As shown in FIG. 5, the Fabry-Perot etalon 500 includes a glass layer 516 having a thickness, d. First and second low emissivity coatings 522 and 524 are formed on opposing faces of the glass layer 516. The first and second low emissivity coatings 522 and 524 have respective reflectivities, R1 and R2. T(φ) represents the transmission of electromagnetic waves (e.g., microwave signal 528) through the Fabry-Perot etalon 500. The transmission T(φ) may be defined by the following equation:

$$T(\emptyset) = \frac{(1 - R_1) \cdot (1 - R_2)}{e^{\frac{\alpha \cdot d}{cos(\theta)}} \cdot \left(1 - \sqrt{R_1 \cdot R_2} \cdot e^{-\frac{\alpha \cdot d}{cos(\theta)}}\right)^2 + 4 \cdot \sqrt{R_1 \cdot R_2} \cdot sin\left(\frac{\Delta\phi}{2}\right)^2}$$

i.  (Equation 1)

where $\alpha$ is the attenuation coefficient, which may be represented by the following equation:
b.

$$\alpha = \frac{2\pi}{\lambda} . n . \tan(\delta)$$

(Equation 2)

where $\tan(\delta)$ is the dielectric loss tangent of the glass layer 516, and where
c.

$$\frac{\Delta\phi}{2} = \frac{2\pi f}{c} nd \cos(\theta)$$

(Equation 3)

where $f$ is the microwave frequency,

$$n = \sqrt{\varepsilon_r}$$ is the index of refraction of the glass layer 516,

$\varepsilon_r$ is the relative permittivity of the glass layer 516,

c is the speed of light in a vaccum,

$\theta$ is the angle of incidence at the glass layer 516, and

R1 and R2 are reflectivity coefficients (0-100%) of the respective first and second low emissivity coatings 522 and 524.

If R=R1=R2, and the attenuation coefficient $\alpha$ is zero, Equation 1 becomes

$$T(\phi) = \frac{1}{1 + F \sin^2(\Delta\phi / 2)}$$  (Equation 4)

where the finesse coefficient of the bandpass filter formed by the Fabry-Perot etalon 500 may be represented by the following equation:

$$F = \frac{4R}{(1-R)^2}.$$ (Equation 5)

The transmission $T(\phi)$ for the Fabry-Perot etalon 526 reaches a maximum when *nd* in Equation 3 reaches $\lambda/2$, where $\lambda$ is wavelength.

FIG. 6 is a plot 600 of an example transmission spectrum of a Fabry-Perot etalon 526 shown in FIG. 5 as a function of frequency in accordance with an embodiment. In FIG. 6, the resonant frequency is shown to be 28 GHz for non-limiting illustrative purposes. It will be recognzied that the Fabry-Perot etalon 526 may be configured to have any suitable resonant frequency. The plot in FIG. 6 shows transmission over a frequency range from 26 GHz to 30 GHz when R=0.9. This relatively low reflectivity value results in a rather broad passband filter function such that the width at the 3dB level (i.e., transmission of 0.5 in the plot) is approximately 1 GHz, as depicted in FIG. 6. For instance, the Fabry-Perot etalon may designed to have the width at the 3dB level be greater than or equal to approximately 1 GHz (e.g., greater than or equal to 0.8 GHz). Designing the Fabry-Perot etalon 526 to have a passband filter function with a width of approximately 1 GHz at the 3dB level is consistent with the expected 0.8 GHz frequency spectrum allocated for 5Guse.

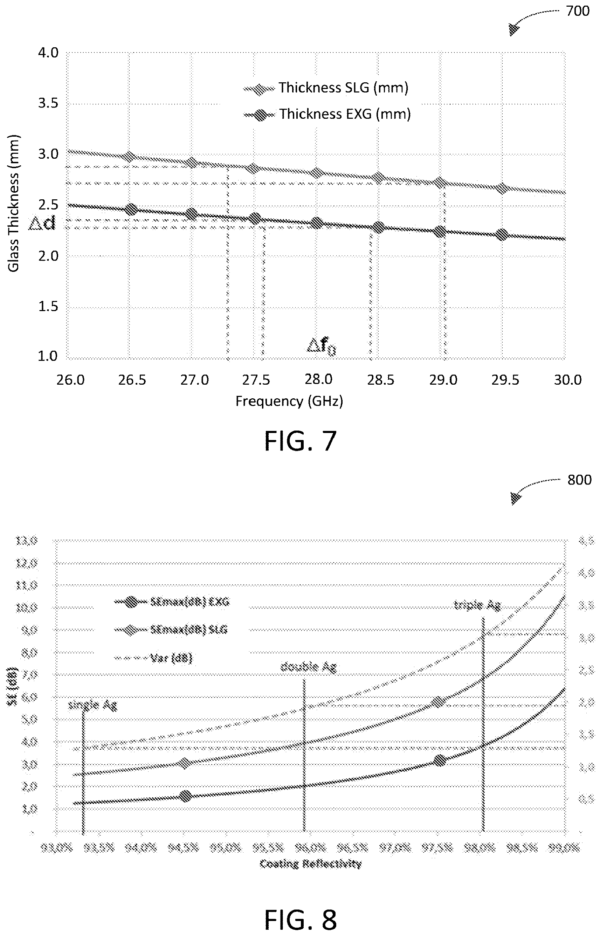

In one example embodiment, the glass layer 516 of the Fabry-Perot etalon 526 is EXG™ glass. The advantages of making the glass layer 516 with EXG™ glass are two fold. First, the relatively low dielectric constant of EXG™ glass ($\varepsilon$=5.27) enables the glass layer 516 to be thinner as compared to incumbent soda-lime glass ($\varepsilon$=7.7). Second, the relatively low thickness variation of EXG™ glass enables the central frequency of the bandpass filter to be precisely tuned to the chosen microwave target frequency. The second advantage is illustrated in FIG. 7, which is a plot 700 showing thickness of soda-lime glass (SLG) and EXG™ glass that is required to tune resonance to a target frequency in accordance with an embodiment. As shown in FIG. 7, the thickness variation $\Delta d$ of EXG™ glass is less than the thickness variation of SLG, which results in the EXG™ glass exhibiting a lower central frequency variation $\Delta f_0$ than the SLG. The thickness variations and frequency variations shown in FIG. 7 are not to scale and are provided merely for illustrative purposes.

The variation of the central frequency may calculated using the following equation:

$$d = \frac{c}{2n}\frac{1}{f} \qquad \Delta f = \frac{c}{2n}\frac{\Delta d}{d^2} = f(\frac{\Delta d}{d})$$ (Equation 6)

where f represents the central frequency. The thickness variation $\Delta d$ of EXG™ glass is approximately 10 $\mu$m, and the thickness variation of SLG is at least ten times higher (i.e., at least 100$\mu$m). Accordingly, the cential frequency variation $\Delta f$ of EXG™ glass is on the order of 0.4%; whereas, the resonance position (i.e., central frequency) of SLG can shift by as much as 3.55%. The shift in the central frequency of the passband filter will result in increased loss of the microwave signal. It should also be noted that SLG requires a greater thickness than EXG™ glass, which adds weight.

A. Influence of Loss Tangent

Maximum transmission in Equation 1 can be written as follows for R=R1=R2 and $\theta$=0°:

$$T_{\max} = \frac{(1-R)^2}{e^{\alpha d}(1-Re^{-\alpha d})^2}.$$ (Equation 7)

FIG. 8 is an example plot 800 showing maximum shield effectiveness (SEmax) of SLG and EXG™ glass at resonance frequency 28 GHz for respective dielectric loss tangents of 0.02 and 0.008 as a function of coating reflectivity in accordance with an embodiment. Shielding effectiveness is calculated using the following equation:

$$SE(dB) = -10 \log(T_{\max})$$ (Equation 8)

As shown in FIG. 8, a single silver-based coating provides a 1.5 dB improvement in shielding effectiveness for EXG™ glass versus SLG. A double silver-based coating provides a 2dB improvement when using EXG™ glass versus SLG. A triple silver-based coating provides more than 3dB improvement for EXG™ glass versus SLG. The window industry tends to provide even more performant low-E coatings (i.e., higher reflectivity) to improve the thermal performance of the window. By using EXG™ glass, low dielectric loss tangent will improve the microwave signal against standard SLG by 3dB.

B. Influence of Angle of Incidence (AOI)

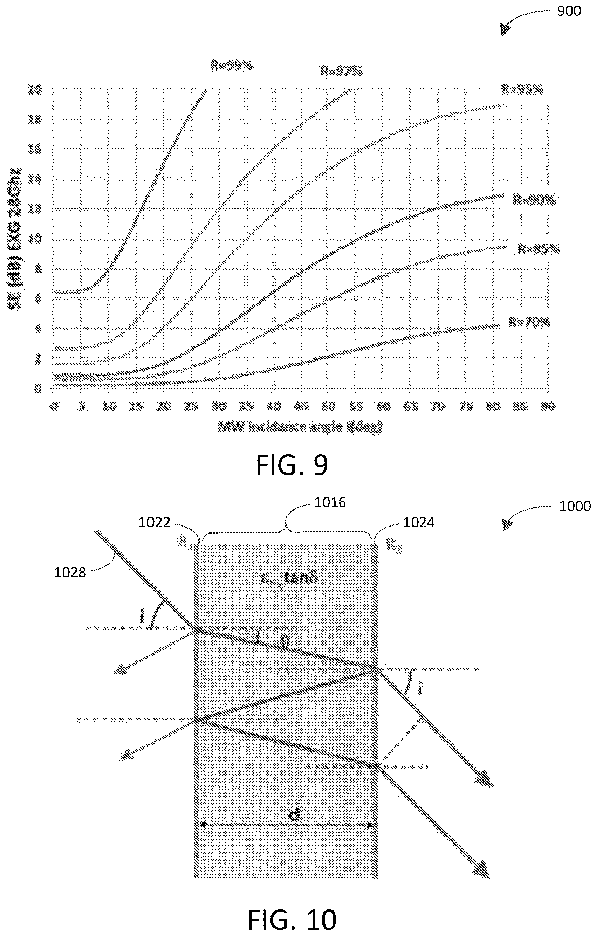

FIG. 9 is an example plot 900 showing an influence of angle of incidence (i.e., angle with respect to normal incidence) on shielding effectiveness for a variety of coating reflectivities (R=R1=R2) in accordance with an embodiment. In the embodiment of FIG. 9, the resonance frequency $f_0$ is 28 Ghz with EXG™ glass as a dielectric. It is assumed that reflector absorption at the low emissivity coatings is neglectable for the microwave. If the signal dampening is allowed to reach a maximum of 10 dB, which is approximately 10% of the incidence signal, the plot 900 shows that the bandpass filter intercepts 100% of the incidence angles (0-90°) for R=70% and R=85%. For R=90%, incidence angles greater than 55° will cause the maximum signal damping to be exceeded. For R=99%, incidence angles greater than 13° will cause the maximum signal damping to be exceeded.

FIG. 10 is a cross-section of an example Fabry-Perot etalon 1000 for which an angle of incidence of a microwave signal 1028 is not normal in accordance with an embodiment. The Fabry-Perot etalon 1000 includes a glass layer 1016 and low-E coatings 1022 and 1024 on opposing surfaces of the glass layer 1016. FIG. 10 is provided to illustrate reflection and transmission of the microwave signal 1028, which is incident on the Fabry-Perot etalon 1000 at an angle, i.

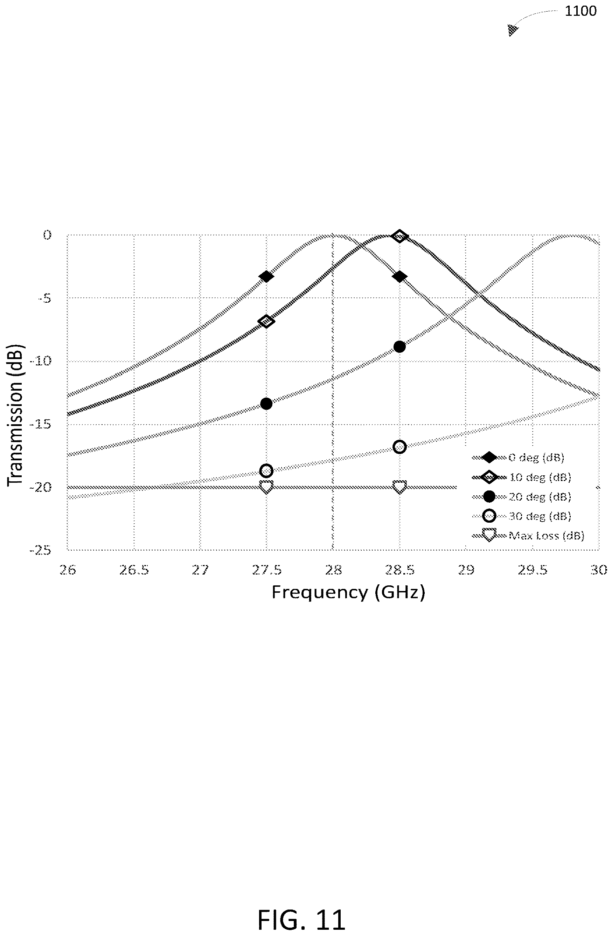

FIG. 11 is an example plot 1100 showing transmission of EXG™ glass having a thickness of 2.33 mm (optimized for 28 GHz) at a variety of incidence angles in accordance with an embodiment. As shown in FIG. 11, an angle of incidence other than zero has negatively affects transmission through the Fabry-Perot etalon. For the curves shown in FIG. 11, reflectivity of the low-E coatings on respective faces of the EXG™ glass layer were set at 90%, and the losses due to the relatively low thickness d of the EXG™ glass layer were neglected. The pass band transfer function of the Fabry-Perot etalon shifts at the angles of incidence other than zero, such that a relatively greater angle of incidence results in a relatively greater shift. It should be noted that despite this shift, the transmission losses through the Fabry-Perot etalon are better than the maximum loss (i.e., $10 \times \log((1-R)^2)$) when the two low-E coated sirfaces act independently. In this case, 10% results in 20 dB loss.

It should be noted that for 10 μm black body (BB) radiation, the Fabry-Perot etalon may act as two independent infrared mirrors because BB radiation has low coherence due to the broad spectral nature of the BB spectrum and because coherent interference (constructive or distinctive that leads to pass band transmission function) of 10 μm radiation with the coherence length of $\sim\lambda^2/\Delta\lambda = 10\mu m^2/10\mu m = 10\mu m$ in a cavity with d = 2.33 mm is not possible. Thus, BB radiation will see two reflective surfaces with each having a reflectivity of 90% (i.e., letting through only 1% of BB 10 μm radiation), and the low-E coatings will contribute to enhancing energy efficiency of the window.

C. Double-Pane Window Design

Double-pane design may have several implementaions. In a first implementation, the EXG™ glass layer coated with low-E coatings with the same thickness d as in the tripple pane design can be attached to either the cavity-facing surface of the first pane or the cavity-facing surface of the second pane, as depicted in FIGS. 3-4. In this implementation, the passband function is similar to the pasband function of the triple-pane design, an example of which is shown in FIG. 2

In a second implementation, the glass layer of the Fabry-Perot etalon is relatively thin (e.g., d << 1 mm). For instance, the glass layer may have a thickness of approximately 0.7 mm. In accordance with the second implementation, the thickness of the glass layer may be as thin as possible while maintaining mechanical integrity, rather than choosing a very specific thickness of the glass layer to tune the Fabri-Perot etalon at the maximum of the transmittance. It should be noted that choosing a very thin layer of glass and depositing a low-E coating on both sides of the glass layer provides a transmisison coefficient that is greater than the transmission coefficient that results from having two reflective surfaces with reflectivities $R_1$ and $R_2$ (i.e., transmission is better than $(1-R_1)*(1-R_2)$). In accordacne with the second implementation, the thin glass layer is attached (e.g., glazed) to one of the glass layers that have larger glass thickness.

Using Equation 4, the condition for maximum thickness of the glass layer may be established using the following inequality:

$$T(\Delta\phi) = \frac{1}{1 + F\sin^2(\Delta\phi/2)} > (1-R_1)*(1-R_2) \quad \text{(Equation 9)}$$

where $\Delta\phi/2$ is given by Equation 3. In the approximation $R_1=R_2$ and $1/(1-R)^2>>1$, the condition for the thickness d when the following ineqality is valid can easily be obtained.

$$d < \frac{1}{2\pi} \times \frac{\lambda}{4Rn} \qquad \text{(Equation 10)}$$

For EXG™ glass, the thickness d in Equation 10 is less than or equal to 220 $\mu$m.

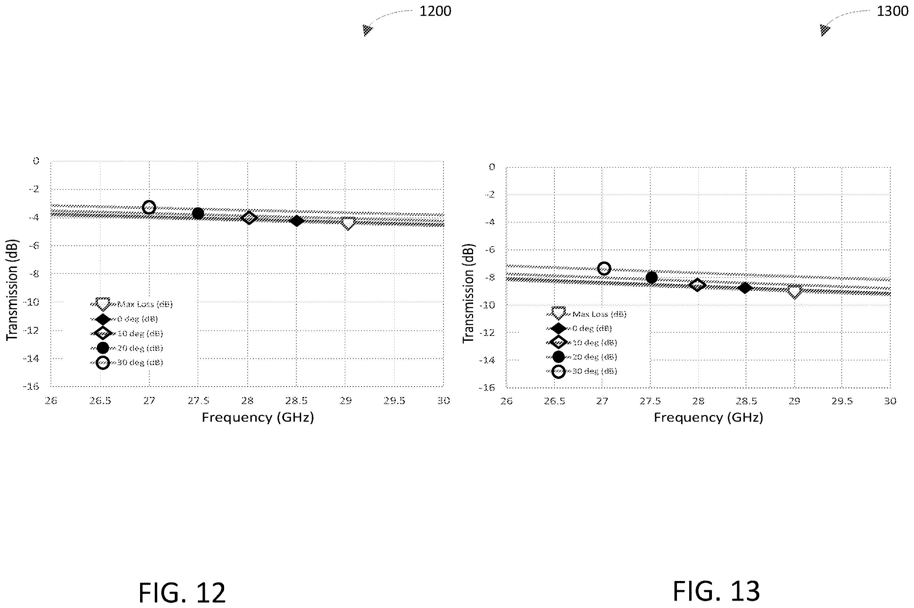

FIG. 12 is an example plot 1200 showing transmission as a function of frequency for an EXG™ glass layer having a thickness of 50 $\mu$m in accordance with an embodiment. The plot 1200 includes multiple curves corresponding to incidence angles of 0°, 10°, 20°, 30°. FIG. 13 is an example plot 1300 showing transmission as a function of frequency for a Fabry-Perot etalon that includes an EXG™ glass layer having a thickness of 50 $\mu$m with low emissivity coatings on opposing surfaces of the EXG™ glass layer in accordance with an embodiment. In accordance with the embodiment of FIG. 13, each of the low-E coatings has a reflection of 90% for illustrative purposes. The plot 1300 includes multiple curves corresponding to incidence angles of 0°, 10°, 20°, 30°.

The maximum loss of the Fabry-Perot etalon is $10 \times \log(1/F) = -20$dB. Accordingly, the curve for the maximum loss is not depcted in FIGS. 12 and 13. It should be noted that the curves shown in FIGS. 12 and 13 are fairly spectrally flat and the transmission at each of the listed incidence angles is greater than the maximum loss of the Fabry-Perot etalon across the shown frequency band of 26 GHz to 30 GHz. It can be seen from FIGS. 12 and 13 that the Fabry-Perot etalon has very slow dependence on the angle of incidence.

Embodiments in which the Fabry-Perot etalon has a relatively thin glass layer have a variety of advantages as compared to embodiments in which the Fabry-Perot etalon has a relatively thick glass layer. First, the transmission function for the embodiments having a relatively thin glass layer becomes very independent of frequency. Equation 9 in the assimptotical limit of $d \to 0$ shows $\dfrac{1}{1 + \mu \cos^2(\theta) f^2}$ behavior with frequency rather than sharp "passband" function. $\mu$ is a relatively small parameter in this calculation.

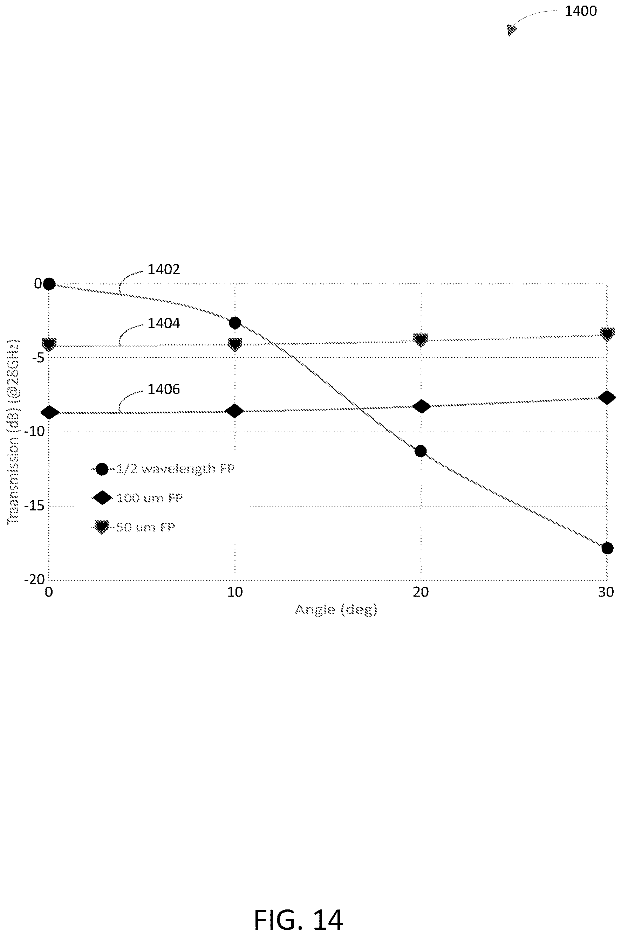

Second, the transmission function becomes much less dependent on the angle of incidence, which may eliminate a need to position customer premise equipment behind the window (also seen from the equation above). This advantage is illustrated in FIG. 14, which is an example plot showing transmission of an EXG™ glass layer at a target frequency of 28 GHz as a function of angle of incidence for a range of glass thicknesses in accordance with an embodiment. FIG. 14 shows a first curve 1402 corresponding to a glass thickness of 1/2 of the wavelength of the electromagnetic wave, a second curve 1404 corresponding to a glass thickness of 100 $\mu$m, and a third curve 1406 corresponding to a glass thickness of 50 $\mu$m. As shown in FIG. 14, the transmission is much less affected by the angle of incidence for the relatively thin glass layers (i.e., curves 1404 and 1406) as compared to the relatively thicker glass layer (i.e., curve 1402).

It should be noted that the Fabry-Perot etalon structures described herein with reference to a double-pane design may be incorporated into a triple-panel design by adhering the Fabry-Perot etalon to a cavity-facing surface of any of the panes in the triple-pane design.

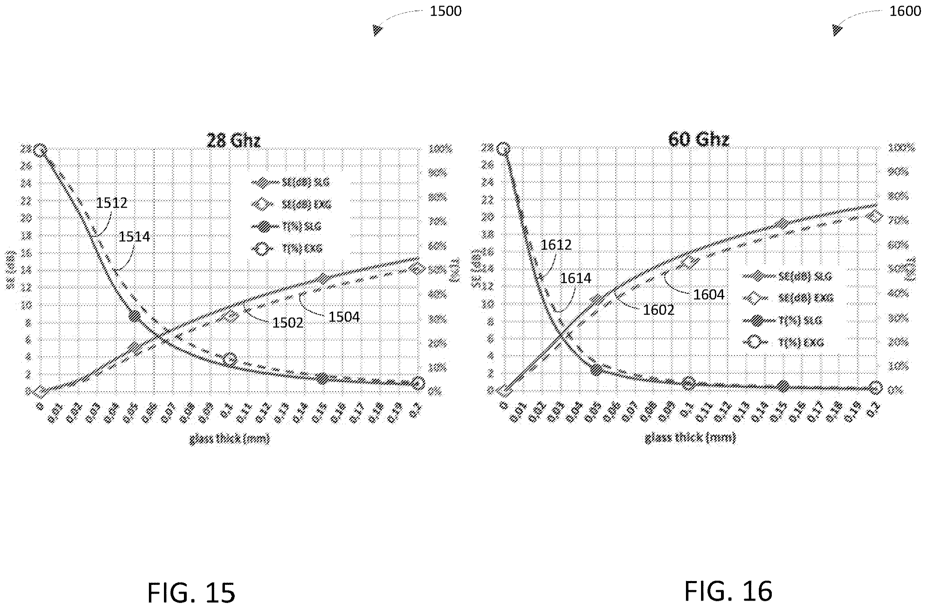

To further illustrate the effect of glass thickness on shielding effectiveness SE(dB) and transmissivity T(%), FIGS. 15 and 16 are provided as example plots 1500 and 1600 showing filter response of a Fabry-Perot etalon that includes a relatively thin glass layer and low-E coatings having a reflectance of 90% for an angle of incidence of 0° at respective target frequencies of 28 GHz and 60 GHz in accordance with embodiments. In FIG. 15, curves 1502 and 1504 represent the shielding effectiveness of SLG and EXG™ glass, respectively, over a range of glass thicknesses from 10 to 200$\mu$m. Curves 1512 and 1514 represent the transmissivity of SLG and EXG™ glass, respectively, over the range of thicknesses. In FIG. 16, curves 1602 and 1604 represent the shielding effectiveness SE(dB) of SLG and EXG™ glass, respectively, over the range of thicknesses. Curves 1612 and 1614 represent the transmissivity T(%) of SLG and EXG™ glass, respectively, over the range of thicknesses.

It is possible that 5G providers will use different frequency bands. For instnace, Verizon may use 28 GHz, and AT&T may use 39 GHz. Accordingly, it may be beneficial for the bandpass filter of the Fabry-Perot etalon to be frequency agnostic, considering that a lifespan of a window is typically estimated to be 20 years.

Equation 1 shows that transmission $T(\phi)$ tends towards 100% (i.e., SE(dB) towards 0dB) when thickness d tends towards 0 mm. With a 50$\mu$m filter, the maximum signal dampening may be 10 dB for 60 Ghz and 4-5 dB for 28 Ghz. EXG™ glass gains 1 dB over SLG, which is not neglectable.

As demonstrated in the foregoing dicsussion, by using a glass thickness in a range from 20 $\mu$m to 100 $\mu$m, a frequency agnostic window (e.g., from 20 GHz to 60 GHz) can be achieved with a maximum gain of 10dB. The relatively low thickness of the glass layer may cause the Fabry-Perot etalon to be incidence angle agnostic, as well. For functional purposes and because of the weak stiffness of the relatively thin glass layer, the glass layer may be laminated onto a thicker piece of glass in accordance with the dual-pane embodiments described above with regard to FIGS. 3-E. Example Method of Use

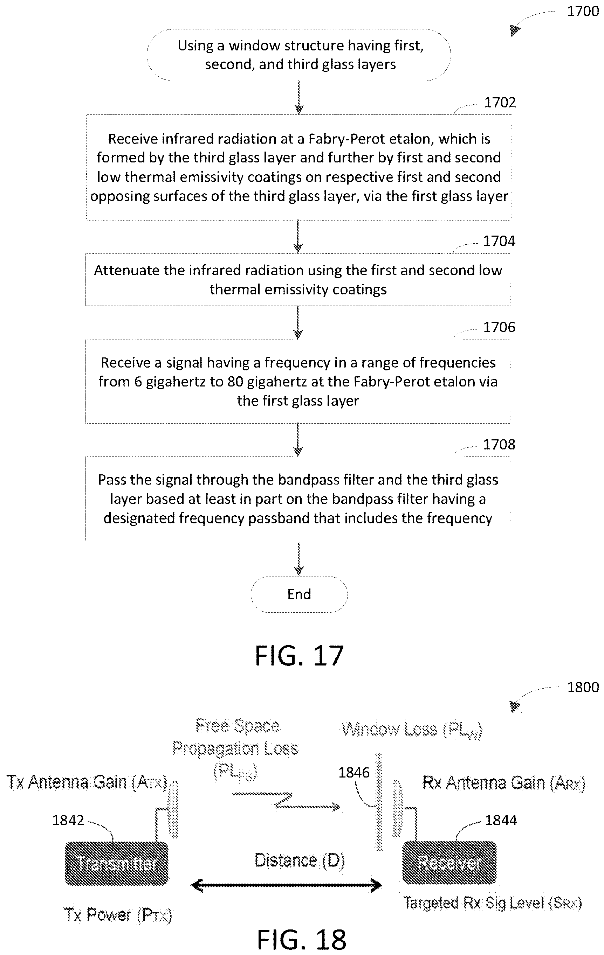

FIG. 17 depicts a flowchart 1700 of an example method for using a window structure having first, second, and third glass layers in accordance with an embodiment. Flowchart 1700 may be performed by any of window structures 200, 300, and 400 shown in respective FIGS. 2-4, for example. For illustrative purposes, flowchart 1700 will be described with reference to the Fabry-Perot etalons 226, 326, 426, 500, or 1000 shown in respective FIGS. 2-5 and 10. Further structural and operational embodiments will be apparent to persons skilled in the relevant art(s) based on the discussion regarding the flowchart 1700.

As shown in FIG. 17, the method of flowchart 17 begins at step 1702. In step 1702, infrared radiation is received at a Fabry-Perot etalon, which is formed by the third glass layer and further by first and second low-E coatings on respective first and second opposing surfaces of the third glass layer, via the first glass layer. In an example implementation, Fabry-Perot etalon 226, 326, 426, 500, or 1000 receives the infrared radiation.

In an example embodiment, receiving the infrared radiation at step 1702 includes receiving the infrared radiation at the Fabry-Perot etalon via the first glass layer and a sealed gas-filled cavity that is formed between the first glass layer and the third glass layer.

At step 1704, the infrared radiation is attenuated using the first and second low-E coatings. In an example implementation, first and second low-E coatings 222 and 224, 322 and 324, 422 and 424, 522 and 524, or 1022 and 1024 attenuate the infrared radiation.

At step 1706, a signal having a frequency in a range of frequencies from 6 gigahertz to 80 gigahertz is received at the Fabry-Perot etalon via the first glass layer. In an example implementation, Fabry-Perot etalon 226, 326, 426, 500, or 1000 receives the signal having the frequency in the range of frequencies from 6 gigahertz to 80 gigahertz.

At step 1708, the signal is passed through the bandpass filter and the third glass layer based at least in part on the bandpass filter having a designated frequency passband that includes the frequency. In an example implementation, the bandpass filter that is formed by the Fabry-Perot etalon 226, 326, 426, 500, or 1000 and the third glass layer 216, 316, 416, 516, or 1016 pass the signal based at least in part on the bandpass filter having the designated frequency passband that includes the frequency.

In an example embodiment, passing the signal through the bandpass filter at step 1708 includes passing the signal through the bandpass filter, a sealed gas-filled cavity that is formed between the second glass layer and the third glass layer, and the third glass layer based at least in part on the designated frequency passband of the bandpass filter including the frequency.

In some example embodiments, one or more steps 1702, 1704, 1706, and/or 1708 of flowchart 1700 may not be performed. Moreover, steps in addition to or in lieu of steps 1702, 1704, 1706, and/or 1708 may be performed.

E. Quantification of Some Example Benefits

The example embodiments may improve the transmission coefficient for a window structure that uses low-E coatings that otherwise (i.e., without a Fabry-Perot etalon described herein) would exhibit microwave loss of 20-30 dB. In many of the example embodiments described herein, low-E coatings having reflectivities of 90% (i.e., transmission of 10%) have been used for non-limiting illustrative purposes. It will be recognized that the low-E coatings may have any suitable reflectivities. Two low-E coatings having reflectivities of 90% and being separated by an arbitrary distance would result in a combined transmission of 1% (i.e., signal will suffer from 20 dB of loss).

A variety of example window structures that include a Fabry-Perot etalon (e.g., Fabry-Perot cavity filter) have been presented to increase transmission in the targeted frequency bands. The greatest transmission may be achieved by using a half-wavelength Fabry-Perot cavity formed by EXG™ glass having a thickness of 2.33 mm, though such a half-wavelength Fabry-Perot cavity may have a finite bandwidth and sharp angle dependence, as depicted by curve 1402 in FIG. 14. Alternatively, the cavity may be formed by a relatively thin glass (e.g., an EXG™ glass layer having a thickness of 50 $\mu$m or 100 $\mu$m). EXG™ glass having a thickness of 50 $\mu$m exhibits less than 5 dB of loss at 28 GHz. EXG™ glass having a thickness of 100 $\mu$m exhibits less than 9 dB of loss at 28 GHz. The loss for both thicknesses is relatively independent of the angle of incidence and the target frequency, as depicted by curves 1404 and 1406 in FIG. 14. Accordingly, the impact of 20-5=15 dB and 20-9=11 dB reduction in loss (e.g., the potential advantages thereof) should be considered in the design of a Fabry-Perot etalon. For purposes of discussion, a loss reduction midway between these two values (i.e., 13 dB) may be selected. It should be noted that 13 dB is selected merely for illustrative purposes and is not intended to be limiting. Any suitable loss reduction may be selected.

In order to provide a quantitative estimate, it may be beneficial to describe the concept of link loss budget and the interplay among propagation distance, window loss, and achievable data rate. FIG. 18 is a diagram of an example microwave link 1800 in accordance with an embodiment. As shown in FIG. 18, the microwave link 1800 includes a transmitter 1842, a receiver 1844, and a window 1846. The transmitter 1842 and the receiver 1844 are separated by a distance D. The link loss budget for the microwave link 1800 may be represented using the following link loss budget equation:

$$P_{TX} + A_{TX} - PL_{FS} - PL_W + A_{RX} = S_{RX} \qquad \text{(Equation 11)}$$

Equation 11 stipulates that receiver power ($S_{RX}$) is equal to transmitter power ($P_{TX}$) minis all pass losses ($PL_{FS}$, $PL_W$) plus antenna gains ($A_{TX}$, $A_{RX}$). $PL_{FS}$ represents free space propagation loss (i.e., the loss through free space between the transmitter 1842 and the window 1846). $PL_W$ represents window loss (i.e., the loss through the window 1846). $A_{TX}$ represents the gain of the transmitter antenna. $A_{RX}$ represents the gain of the receiver antenna. For simplicity, it is assumed that there are no loss mechanisms other than the free space propagation loss and window loss. The free space propagation loss may be represented by the following equation:

$$PL_{FS} = 10\log\left[\frac{(4\pi R)^2}{\lambda^2}\right] \qquad \text{(Equation 12)}$$

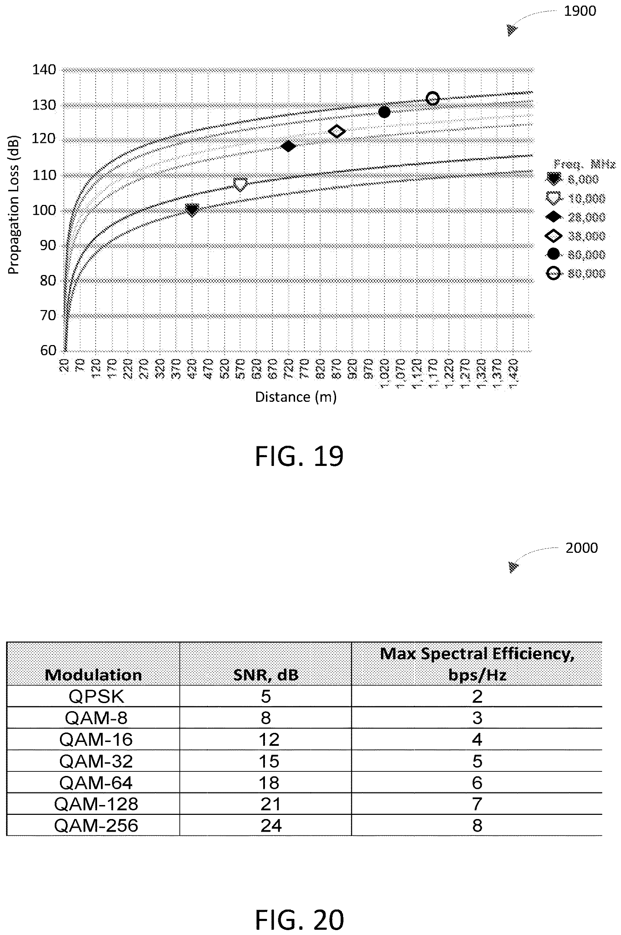

FIG. 19 is an example plot 1900 of free space propagation loss ($PL_{FS}$) with respect to distance for a variety of frequencies in accordance with an embodiment. As shown in FIG. 19, the propagation loss $PL_{FS}$ increases by 6 dB for every doubling of the distance. Since window loss and free space propagation loss are subtracted from the transmitter power in Equation 11, reduction in window loss by 13 dB would enable the link to be at least 4 times longer. In other words, such reduction in window loss would enable the distance D between the transmitter 1842 and the receiver 1844 to be quadrupled because the 13 dB reduction in window loss can accommodate the 12 dB increase in free space propagation loss that would result from the distance D being quadrupled. Accordingly, the example embodiments described herein could theortically enable increasing the propagation distance by 4 times. In actual field deployments, the increase in distance will inevitably coincide with introduction of other losses (e.g., foliage and absoprtion due to water (e.g., rain)), which may reduce an actual acheiveable increase in distance.
Another benefit of lower window loss $PL_W$ can be realized even without increasing the distance. The maximum acheivable data rate in the channel with a signal-to-noise ratio (SNR), which is a ratio of signal power $P_{sig}$ to noise power $P_N$, is expressed by the well-known Shannon formula:

$$B = \Delta f \times \log_2\left(1 + \frac{P_{sig}}{P_N}\right) = \Delta f \times \log_2(1 + SNR) \qquad \text{(Equation 13)}$$

Equation 13 shows that having higher Psig at the receiver 1844 enables higher SNR, which in turn allows higher data rate B. The quantity B/Δf is called spectral efficiency (SE), and Equation 13 can be rewritten as follows:

$$SE = \log_2(1 + SNR) \qquad \text{(Equation 14)}$$

The increase in the bit rate cannot be determined using Equation 12 because the increase depends on the starting SNR (i.e., with the window not having enhanced microwave transparency). The increase in bit rate can therefore be described for a particular case in which an assumption is made that the link is operational with spectral efficiency of 6 (corresponding to the QAM-64 modulation format that is common for microwave links), which requires SNR=18. An increase of the SNR by 18 dB, resulting in an SNR=18+13=31 dB at the receiver, enables a spectral efficeincy of 10 b/s/Hz, which corresponds to increasing the spectral efficiency and channel capacity by 66%. It should be noted that even though Equation 14 shows a maximum acheivable spectral efficiency in real hardware, very high spectral efficiency may not be realized due to complexity of the modulaion format that is needed for its realization.
Nonetheless, replacing a conventional window with a microwave-transparent window in accordance with the techniques described herein may (a) enable the distance from the 5G transmitter to the receiver to be increased by 4 times, assuming that there are no other sources of loss except free space propagation loss and window loss), and (b) increase data rate in the communication channel by up to 66%.
FIG. 20 is an example table of some common modulation formats that are used in 5G links, along with corresponding maximum spectral efficiencies and minimum required signal-to-noise ratios (SNR) at the receiver, in accordance with an embodiment.

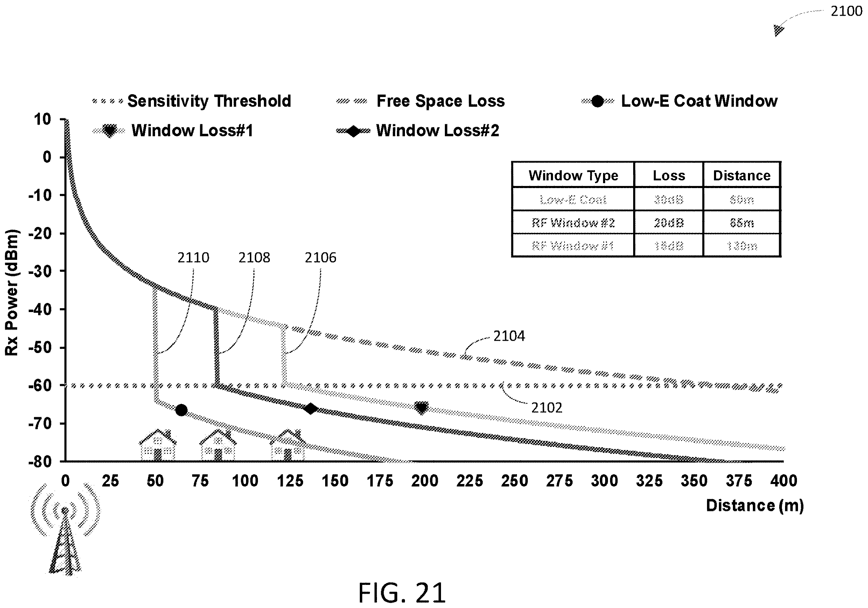

FIG. 21 is an example plot 2100 of receiver power (i.e., signal power at the receiver) with respect to distance from a transmitting antenna for three example windows in accordance with an embodiment. The signal that is incident at the receiver has a frequency of 60 GHz. The receiver includes an antenna having an antenna gain of 30 dBi and an effective isotropic radiated power (EIRP) of 40 dBm for purposes of illustration. The signal needs to have a power greater than or equal to a sensitivity threshold of -60 dB in order to be detected by the antenna. The sensitivity threshold is represented by line 2102. Curve 2104 represents the power of the signal in free space (e.g., without passing through a window) at various distances from the transmitting antenna. As shown in FIG. 21, the signal can travel approximately 375 m in free space before reaching the sensitivity threshold.

Curve 2106 represents the power of the signal as it passes through a first window (i.e., Window #1) having a first window loss of approximately -15 dB. The signal has approximately -60 dB of power after passing through the first window when the first window is approximately 125 m from the transmitting antenna. Accordingly, 125 m is the maximum distance that the first window can be from the transmitting antenna in order for the signal to be detected through the first window.

Curve 2108 represents the power of the signal as it passes through a second window (i.e., Window #2) having a second window loss of approximately -20 dB. The signal has approximately -60 dB of power after passing through the second window when the second window is approximately 85 m from the transmitting antenna. Accordingly, 85 m is the maximum distance that the second window can be from the transmitting antenna in order for the signal to be detected through the second window.

Curve 2110 represents the power of the signal as it passes through a low thermal emissivity (a.k.a. low-E) coated window having a third window loss of approximately -30 dB. The signal has approximately -60 dB of power after passing through the low-E coated window when the low-E coated window is approximately 50 m from the transmitting antenna. Accordingly, 50 m is the maximum distance that the low-E coated window can be from the transmitting antenna in order for the signal to be detected through the low-E coated window.

It is desirable to reduce the amount of window loss to increase the distance between the transmitting antenna and the receiving antenna (e.g., the distance that a base station can be from a home), use fewer base stations, etc. By utilizing a window structure having a Fabry-Perot etalon as described herein, a signal that has a frequency in the range from 6 GHz to 80 GHz may have an attenuation, which results from the signal traveling at least a threshold distance and passing through the window structure, of less than or equal to -70dB. For instance, the threshold distance may be 100 m, 125 m, or 150 m.

III. Further Discussion of Some Example Embodiments

A first example window structure comprises first, second, and third glass layers. The third glass layer is positioned between the first and second glass layers. First and second low thermal emissivity coatings are on respective first and second opposing surfaces of the third glass layer to form a Fabry-Perot etalon that is configured as a bandpass filter having a designated frequency passband that includes at least one frequency in a range of frequencies from 6 gigahertz to 80 gigahertz.

In a first aspect of the first example window structure, the third glass layer is positioned between the first and second glass layers to form a first cavity between the first glass layer and the third glass layer and to form a second cavity between the second glass layer and the third glass layer.

In a second aspect of the first example window structure, a distance between the first surface and the first glass layer is less than a distance between the second surface and the first glass layer. In accordance with the second aspect, the first glass layer is adhered to the first low thermal emissivity coating. In further accordance with the second aspect, the third glass layer is positioned between the first and second glass layers to form a cavity between the second glass layer and the third glass layer. In further accordance with the second aspect, the first glass layer is configured to face an exterior of a building when the window structure is installed. In further accordance with the second aspect, the second glass layer is configured to face an interior of the building when the window structure is installed. The second aspect of the first example window structure may be implemented in combination with the first aspect of the first example window structure, though the example embodiments are not limited in this respect.

In a third aspect of the first example window structure, a distance between the first surface and the first glass layer is less than a distance between the second surface and the first glass layer. In accordance with the third aspect, the third glass layer is positioned between the first and second glass layers to form a cavity between the first glass layer and the third glass layer. In further accordance with the third aspect, the second glass layer is adhered to the second low thermal emissivity coating. In further accordance with the third aspect, the first glass layer is configured to face an exterior of a building when the window structure is installed. In further accordance with the third aspect, the second glass layer is configured to face an interior of the building when the window structure is installed. The third aspect of the first example window structure may be implemented in combination with the first and/or second aspect of the first example window structure, though the example embodiments are not limited in this respect.

In a fourth aspect of the first example window structure, the third glass layer is at least nine times more transmissive than soda lime glass with regard to at least one of 28 gigahertz, 37 gigahertz, 39 gigahertz, or 60 gigahertz. The fourth aspect of the first example window structure may be implemented in combination with the first, second, and/or third aspect of the first example window structure, though the example embodiments are not limited in this respect.

In a fifth aspect of the first example window structure, a product of (a) a square of a permeability of the third glass layer at a designated frequency that is included among the at least one frequency and (b) a thickness of the third glass layer equals approximately one-half of a wavelength that corresponds to a central frequency of the bandpass filter. The fifth aspect of the first example window structure may be implemented in combination with the first, second, third, and/or fourth aspect of the first example window structure, though the example embodiments are not limited in this respect.

In a sixth aspect of the first example window structure, the designated frequency passband of the bandpass filter includes at least one frequency in a range of frequencies from 28 gigahertz to 80 gigahertz. The sixth aspect of the first example window structure may be implemented in combination with the first, second, third, fourth, and/or fifth aspect of the first example window structure, though the example embodiments are not limited in this respect.

In a seventh aspect of the first example window structure, the designated frequency passband of the bandpass filter includes at least one of 28 gigahertz, 37 gigahertz, 39 gigahertz, or 60 gigahertz. The seventh aspect of the first example window structure may be implemented in combination with the first, second, third, fourth, fifth, and/or sixth aspect of the first example window structure, though the example embodiments are not limited in this respect.

In an eighth aspect of the first example window structure, the designated frequency passband of the bandpass filter includes a range of frequencies from 28 gigahertz to 60 gigahertz. The eighth aspect of the first example window structure may be implemented in combination with the first, second, third, fourth, fifth, sixth, and/or seventh aspect of the first example window structure, though the example embodiments are not limited in this respect.

In a ninth aspect of the first example window structure, the designated frequency passband of the bandpass filter includes a range of frequencies from 6 gigahertz to 80 gigahertz. The ninth aspect of the first example window structure may be implemented in combination with the first, second, third, fourth, fifth, sixth, seventh, and/or eighth aspect of the first example window structure, though the example embodiments are not limited in this respect.

In a tenth aspect of the first example window structure, the third glass layer has a maximum thickness variation of less than or equal to 20 micrometers. The tenth aspect of the first example window structure may be implemented in combination with the first, second, third, fourth, fifth, sixth, seventh, eighth, and/or ninth aspect of the first example window structure, though the example embodiments are not limited in this respect.

In an eleventh aspect of the first example window structure, the third glass layer has a maximum thickness variation of less than or equal to 10 micrometers. The eleventh aspect of the first example window structure may be implemented in combination with the first, second, third, fourth, fifth, sixth, seventh, eighth, ninth, and/or tenth aspect of the first example window structure, though the example embodiments are not limited in this respect.

In a twelfth aspect of the first example window structure, the third glass layer has a thickness in a range from 0.5 millimeters to 3.0 millimeters. The twelfth aspect of the first example window structure may be implemented in combination with the first, second, third, fourth, fifth, sixth, seventh, eighth, ninth, tenth, and/or eleventh aspect of the first example window structure, though the example embodiments are not limited in this respect.

In a thirteenth aspect of the first example window structure, the third glass layer has a thickness equal to an integer multiple of approximately 1.2 millimeters, approximately 1.7 millimeters, approximately 1.8 millimeters, or approximately 2.5 millimeters. The thirteenth aspect of the first example window structure may be implemented in combination with the first, second, third, fourth, fifth, sixth, seventh, eighth, ninth, tenth, eleventh, and/or twelfth aspect of the first example window structure, though the example embodiments are not limited in this respect.

In a fourteenth aspect of the first example window structure, the third glass layer has a thickness in a range from 10 micrometers to 500 micrometers. The fourteenth aspect of the first example window structure may be implemented in combination with the first, second, third, fourth, fifth, sixth, seventh, eighth, ninth, tenth, eleventh, twelfth, and/or thirteenth aspect of the first example window structure, though the example embodiments are not limited in this respect.

In a fifteenth aspect of the first example window structure, a frequency response of the bandpass filter is unaffected by incidence angles of signals having frequencies in the designated frequency passband. The fifteenth aspect of the first example window structure may be implemented in combination with the first, second, third, fourth, fifth, sixth, seventh, eighth, ninth, tenth, eleventh, twelfth, thirteenth, and/or fourteenth aspect of the first example window structure, though the example embodiments are not limited in this respect.

In a sixteenth aspect of the first example window structure, the third glass layer is configured to cause a central frequency of the bandpass filter to vary less than 1.0 percent. The sixteenth aspect of the first example window structure may be implemented in combination with the first, second, third, fourth, fifth, sixth, seventh, eighth, ninth, tenth, eleventh, twelfth, thirteenth, fourteenth, and/or fifteenth aspect of the first example window structure, though the example embodiments are not limited in this respect.

In a seventeenth aspect of the first example window structure, the third glass layer is configured to cause a central frequency of the bandpass filter to vary less than 0.5 percent. The seventeenth aspect of the first example window structure may be implemented in combination with the first, second, third, fourth, fifth, sixth, seventh, eighth, ninth, tenth, eleventh, twelfth, thirteenth, fourteenth, fifteenth, and/or sixteenth aspect of the first example window structure, though the example embodiments are not limited in this respect.

In an eighteenth aspect of the first example window structure, the third glass layer has a dielectric loss tangent of less than 0.01. The eighteenth aspect of the first example window structure may be implemented in combination with the first, second, third, fourth, fifth, sixth, seventh, eighth, ninth, tenth, eleventh, twelfth, thirteenth, fourteenth, fifteenth, sixteenth, and/or seventeenth aspect of the first example window structure, though the example embodiments are not limited in this respect.

In a nineteenth aspect of the first example window structure, the third glass layer has a dielectric loss tangent of less than 0.006. The nineteenth aspect of the first example window structure may be implemented in combination with the first, second, third, fourth, fifth, sixth, seventh, eighth, ninth, tenth, eleventh, twelfth, thirteenth, fourteenth, fifteenth, sixteenth, seventeenth, and/or eighteenth aspect of the first example window structure, though the example embodiments are not limited in this respect.

In a twentieth aspect of the first example window structure, the window structure is capable of being fabricated using existing window processing techniques. In accordance with the twentieth aspect, the Fabry-Perot etalon is compatible with existing window structures. The twentieth aspect of the first example window structure may be implemented in combination with the first, second, third, fourth, fifth, sixth, seventh, eighth, ninth, tenth, eleventh, twelfth, thirteenth, fourteenth, fifteenth, sixteenth, seventeenth, eighteenth, and/or nineteenth aspect of the first example window structure, though the example embodiments are not limited in this respect.

In a twenty-first aspect of the first example window structure, the bandpass filter has a 3dB bandwidth greater than or equal to approximately one gigahertz. The twenty-first aspect of the first example window structure may be implemented in combination with the first, second, third, fourth, fifth, sixth, seventh, eighth, ninth, tenth, eleventh, twelfth, thirteenth, fourteenth, fifteenth, sixteenth, seventeenth, eighteenth, nineteenth, and/or twentieth aspect of the first example window structure, though the example embodiments are not limited in this respect.

In a twenty-second aspect of the first example window structure, the first low thermal emissivity coating and the second low thermal emissivity coating have respective first and second reflectivities with regard to infrared wavelengths. In accordance with the twenty-second aspect, an average of the first reflectivity and the second reflectivity is at least 85%. The twenty-second aspect of the first example window structure may be implemented in combination with the first, second, third, fourth, fifth, sixth, seventh, eighth, ninth, tenth, eleventh, twelfth, thirteenth, fourteenth, fifteenth, sixteenth, seventeenth, eighteenth, nineteenth, twentieth, and/or twenty-first aspect of the first example window structure, though the example embodiments are not limited in this respect.

In a twenty-third aspect of the first example window structure, the first low thermal emissivity coating and the second low thermal emissivity coating have respective first and second reflectivities with regard to infrared wavelengths. In accordance with the twenty-third aspect, an average of the first reflectivity and the second reflectivity is at least 90%. The twenty-third aspect of the first example window structure may be implemented in combination with the first, second, third, fourth, fifth, sixth, seventh, eighth, ninth, tenth, eleventh, twelfth, thirteenth, fourteenth, fifteenth, sixteenth, seventeenth, eighteenth, nineteenth, twentieth, twenty-first, and/or twenty-second aspect of the first example window structure, though the example embodiments are not limited in this respect.

In a twenty-fourth aspect of the first example window structure, the first low thermal emissivity coating and the second low thermal emissivity coating have respective first and second reflectivities with regard to infrared wavelengths. In accordance with the twenty-fourth aspect, an average of the first reflectivity and the second reflectivity is at least 95%. The twenty-fourth aspect of the first example window structure may be implemented in combination with the first, second, third, fourth, fifth, sixth, seventh, eighth, ninth, tenth, eleventh, twelfth, thirteenth, fourteenth, fifteenth, sixteenth, seventeenth, eighteenth, nineteenth, twentieth, twenty-first, twenty-second, and/or twenty-third aspect of the first example window structure, though the example embodiments are not limited in this respect.

In a twenty-fifth aspect of the first example window structure, the Fabry-Perot etalon is configured to enable a signal that has a frequency in the range from 6 gigahertz to 80 gigahertz to have an attenuation, which results from the signal traveling at least 100 meters and passing through the window structure, of less than or equal to 70dB. The twenty-fifth aspect of the first example window structure may be implemented in combination with the first, second, third, fourth, fifth, sixth, seventh, eighth, ninth, tenth, eleventh, twelfth, thirteenth, fourteenth, fifteenth, sixteenth, seventeenth, eighteenth, nineteenth, twentieth, twenty-first, twenty-second, twenty-third, and/or twenty-fourth aspect of the first example window structure, though the example embodiments are not limited in this respect.

A second example window structure comprises first, second, and third glass layers. Each of the first and second glass layers comprises a soda-lime glass. The third glass layer has a first face and a second face, a thickness of less than 2.5 millimeters, a thickness variation of less than 10 micrometers, and a dielectric loss tangent of less than 0.01. The third glass layer is positioned between the first and second glass layers to form a first cavity between the first glass layer and the third glass layer. The second example window structure further comprises first coating on the first face of the third glass layer and a second coating on the second face of the third glass layer. The first and second coatings comprise respective reflective low-emissive coatings. The third glass layer in combination with the first and second coatings form a Fabry-Perot etalon that is configured as a bandpass filter having a designated frequency passband that includes at least one frequency in a range of frequencies from 20 gigahertz to 80 gigahertz.

In a first aspect of the second example window structure, the third glass layer is positioned between the first and second glass layers further to form a second cavity between the second glass layer and the third glass layer.

In a second aspect of the second example window structure, the third glass layer is configured to be at least ten times more transmissive than soda lime glass with regard to at least one of 28 gigahertz, 37 gigahertz, 39 gigahertz, or 60 gigahertz. The second aspect of the second example window structure may be implemented in combination with the first aspect of the second example window structure, though the example embodiments are not limited in this respect.

In a third aspect of the second example window structure, a product of (a) a square of a permeability of the third glass layer at a designated frequency that is included among the at least one frequency and (b) the thickness of the third glass layer equals approximately one-half of a wavelength that corresponds to a central frequency of the bandpass filter. The third aspect of the second example window structure may be implemented in combination with the first and/or second aspect of the second example window structure, though the example embodiments are not limited in this respect.

In a fourth aspect of the second example window structure, the designated frequency passband of the bandpass filter includes a range of frequencies from 28 gigahertz to 60 gigahertz. The fourth aspect of the second example window structure may be implemented in combination with the first, second, and/or third aspect of the second example window structure, though the example embodiments are not limited in this respect.

In a fifth aspect of the second example window structure, the bandpass filter has a 3dB bandwidth greater than or equal to 0.8 gigahertz. The fifth aspect of the second example window structure may be implemented in combination with the first, second, third, and/or fourth aspect of the second example window structure, though the example embodiments are not limited in this respect.

In a sixth aspect of the second example window structure, the low-emissive coatings in the respective first and second coatings have respective first and second reflectivities with regard to infrared wavelengths. In accordance with the sixth aspect, an average of the first reflectivity and the second reflectivity is at least 90%. The sixth aspect of the second example window structure may be implemented in combination with the first, second, third, fourth, and/or fifth aspect of the second example window structure, though the example embodiments are not limited in this respect.

In an example method of using a window structure having first, second, and third glass layers, infrared radiation is received at a Fabry-Perot etalon, which is formed by the third glass layer and further by first and second low thermal emissivity coatings on respective first and second opposing surfaces of the third glass layer, via the first glass layer. The infrared radiation is attenuated using the first and second low thermal emissivity coatings. A signal having a frequency in a range of frequencies from 6 gigahertz to 80 gigahertz is received at the Fabry-Perot etalon via the first glass layer. The signal is passed through the bandpass filter and the third glass layer based at least in part on the bandpass filter having a designated frequency passband that includes the frequency.

In a first aspect of the example method, receiving the infrared radiation comprises receiving the infrared radiation at the Fabry-Perot etalon via the first glass layer and a sealed gas-filled cavity that is formed between the first glass layer and the third glass layer.

In a second aspect of the example method, passing the signal through the bandpass filter comprises passing the signal through the bandpass filter, a sealed gas-filled cavity that is formed between the second glass layer and the third glass layer, and the third glass layer based at least in part on the designated frequency passband of the bandpass filter including the frequency. The second aspect of the example method may be implemented in combination with the first aspect of the example method, though the example embodiments are not limited in this respect.

The description further includes the following clauses:

1. A window structure comprising:

first and second glass layers;
a third glass layer positioned between the first and second glass layers; and
first and second low thermal emissivity coatings on respective first and second opposing surfaces of the third glass layer to form a Fabry-Perot etalon that is configured as a bandpass filter having a designated frequency passband that includes at least one frequency in a range of frequencies from 6 gigahertz to 80 gigahertz.

2. The window structure of clause 1, wherein the third glass layer is positioned between the first and second glass layers to form a first cavity between the first glass layer and the third glass layer and to form a second cavity between the second glass layer and the third glass layer.

3. The window structure of clause 1, wherein a distance between the first surface and the first glass layer is less than a distance between the second surface and the first glass layer;

wherein the first glass layer is adhered to the first low thermal emissivity coating;
wherein the third glass layer is positioned between the first and second glass layers to form a cavity between the second glass layer and the third glass layer;
wherein the first glass layer is configured to face an exterior of a building when the window structure is installed; and
wherein the second glass layer is configured to face an interior of the building when the window structure is installed.

4. The window structure of clause 1, wherein a distance between the first surface and the first glass layer is less than a distance between the second surface and the first glass layer;

wherein the third glass layer is positioned between the first and second glass layers to form a cavity between the first glass layer and the third glass layer;
wherein the second glass layer is adhered to the second low thermal emissivity coating;
wherein the first glass layer is configured to face an exterior of a building when the window structure is installed; and
wherein the second glass layer is configured to face an interior of the building when the window structure is installed.

5. The window structure of any of the previous clauses, wherein the third glass layer is at least nine times more transmissive than soda lime glass with regard to at least one of 28 gigahertz, 37 gigahertz, 39 gigahertz, or 60 gigahertz.

6. The window structure of any of the previous clauses, wherein a product of (a) a square of a permeability of the third glass layer at a designated frequency that is included among the at least one frequency and (b) a thickness of the third glass layer equals approximately one-half of a wavelength that corresponds to a central frequency of the bandpass filter.

7. The window structure of any of the previous clauses, wherein the designated frequency passband of the bandpass filter includes at least one frequency in a range of frequencies from 28 gigahertz to 80 gigahertz.

8. The window structure of any of the previous clauses, wherein the designated frequency passband of the bandpass filter includes at least one of 28 gigahertz, 37 gigahertz, 39 gigahertz, or 60 gigahertz.

9. The window structure of any of the previous clauses, wherein the designated frequency passband of the bandpass filter includes a range of frequencies from 6 gigahertz to 80 gigahertz.

10. The window structure of any of the previous clauses, wherein the designated frequency passband of the bandpass filter includes a range of frequencies from 28 gigahertz to 60 gigahertz.

11. The window structure of any of the previous clauses, wherein the third glass layer has a maximum thickness variation of less than or equal to 20 micrometers.

12. The window structure of any of the previous clauses, wherein the third glass layer has a maximum thickness variation of less than or equal to 10 micrometers.

13. The window structure of any of the previous clauses, wherein the third glass layer has a thickness in a range from 0.5 millimeters to 3.0 millimeters.

14. The window structure of any of the previous clauses, wherein the third glass layer has a thickness equal to an integer multiple of approximately 1.2 millimeters, approximately 1.7 millimeters, approximately 1.8 millimeters, or approximately 2.5 millimeters.

15. The window structure of any of clauses 1-12, wherein the third glass layer has a thickness in a range from 10 micrometers to 500 micrometers.

16. The window structure of any of the previous clauses, wherein a frequency response of the bandpass filter is unaffected by incidence angles of signals having frequencies in the designated frequency passband.

17. The window structure of any of the previous clauses, wherein the third glass layer is configured to cause a central frequency of the bandpass filter to vary less than 1.0 percent.

18. The window structure of any of the previous clauses, wherein the third glass layer is configured to cause a central frequency of the bandpass filter to vary less than 0.5 percent.

19. The window structure of any of the previous clauses, wherein the third glass layer has a dielectric loss tangent of less than 0.01.

20. The window structure of any of the previous clauses, wherein the third glass layer has a dielectric loss tangent of less than 0.006.

21. The window structure of any of the previous clauses, wherein the window structure is capable of being fabricated using existing window processing techniques; and

wherein the Fabry-Perot etalon is compatible with existing window structures.

22. The window structure of any of the previous clauses, wherein the bandpass filter has a 3dB bandwidth greater than or equal to approximately one gigahertz.

23. The window structure of any of the previous clauses, wherein the first low thermal emissivity coating and the second low thermal emissivity coating have respective first and second reflectivities with regard to infrared wavelengths; and

wherein an average of the first reflectivity and the second reflectivity is at least 85%.

24. The window structure of any of the previous clauses, wherein the first low thermal emissivity coating and the second low thermal emissivity coating have respective first and second reflectivities with regard to infrared wavelengths; and

wherein an average of the first reflectivity and the second reflectivity is at least 90%.

25. The window structure of any of the previous clauses, wherein the first low thermal emissivity coating and the second low thermal emissivity coating have respective first and second reflectivities with regard to infrared wavelengths; and

wherein an average of the first reflectivity and the second reflectivity is at least 95%.

26. The window structure of any of the previous clauses, wherein the Fabry-Perot etalon is configured to enable a signal that has a frequency in the range from 6 gigahertz to 80 gigahertz to have an attenuation, which results from the signal traveling at least 100 meters and passing through the window structure, of less than or equal to 70dB.

27. A window structure comprising:

first and second glass layers, each of the first and second glass layers comprising a soda-lime glass;

a third glass layer having a first face and a second face, a thickness of less than 2.5 millimeters, a thickness variation of less than 10 micrometers, and a dielectric loss tangent of less than 0.01, wherein the third glass layer is positioned between the first and second glass layers to form a first cavity between the first glass layer and the third glass layer; and

a first coating on the first face of the third glass layer and a second coating on the second face of the third glass layer, the first and second coatings comprising respective reflective low-emissive coatings;

wherein the third glass layer in combination with the first and second coatings form a Fabry-Perot etalon that is configured as a bandpass filter having a designated frequency passband that includes at least one frequency in a range of frequencies from 20 gigahertz to 80 gigahertz.

28. The window structure of clause 27, wherein the third glass layer is positioned between the first and second glass layers further to form a second cavity between the second glass layer and the third glass layer.

29. The window structure of any of clauses 27-28, wherein the third glass layer is configured to be at least ten times more transmissive than soda lime glass with regard to at least one of 28 gigahertz, 37 gigahertz, 39 gigahertz, or 60 gigahertz.

30. The window structure of any of clauses 27-29, wherein a product of (a) a square of a permeability of the third glass layer at a designated frequency that is included among the at least one frequency and (b) the thickness of the third glass layer equals approximately one-half of a wavelength that corresponds to a central frequency of the bandpass filter.

31. The window structure of any of clauses 27-30, wherein the designated frequency passband of the bandpass filter includes a range of frequencies from 28 gigahertz to 60 gigahertz.

32. The window structure of any of clauses 27-31, wherein the bandpass filter has a 3dB bandwidth greater than or equal to 0.8 gigahertz.

33. The window structure of any of clauses 27-32, wherein the low-emissive coatings in the respective first and second coatings have respective first and second reflectivities with regard to infrared wavelengths; and

wherein an average of the first reflectivity and the second reflectivity is at least 90%.

34. A method of using a window structure having first, second, and third glass layers, the method comprising:

receiving infrared radiation at a Fabry-Perot etalon, which is formed by the third glass layer and further by first and second low thermal emissivity coatings on respective first and second opposing surfaces of the third glass layer, via the first glass layer;

attenuating the infrared radiation using the first and second low thermal emissivity coatings;

receiving a signal having a frequency in a range of frequencies from 6 gigahertz to 80 gigahertz at the Fabry-Perot etalon via the first glass layer; and

passing the signal through the bandpass filter and the third glass layer based at least in part on the bandpass filter having a designated frequency passband that includes the frequency.

35. The method of clause 34, wherein receiving the infrared radiation comprises:
receiving the infrared radiation at the Fabry-Perot etalon via the first glass layer and a sealed gas-filled cavity that is formed between the first glass layer and the third glass layer.
36. The method of clause 34, wherein passing the signal through the bandpass filter comprises:
passing the signal through the bandpass filter, a sealed gas-filled cavity that is formed between the second glass layer and the third glass layer, and the third glass layer based at least in part on the designated frequency passband of the bandpass filter including the frequency.

IV. Conclusion

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

**Claims**

1. A window structure comprising:

   first and second glass layers, each of the first and second glass layers comprising a soda-lime glass;
   a third glass layer having a first face and a second face, a thickness of less than 2.5 millimeters, a thickness variation of less than 10 micrometers, and a dielectric loss tangent of less than 0.01, wherein the third glass layer is positioned between the first and second glass layers to form a first cavity between the first glass layer and the third glass layer; and
   a first coating on the first face of the third glass layer and a second coating on the second face of the third glass layer, the first and second coatings comprising respective reflective low-emissive coatings;
   wherein the third glass layer in combination with the first and second coatings form a Fabry-Perot etalon that is configured as a bandpass filter having a designated frequency passband that includes at least one frequency in a range of frequencies from 20 gigahertz to 80 gigahertz.

2. The window structure of claim 1, wherein the third glass layer is positioned between the first and second glass layers further to form a second cavity between the second glass layer and the third glass layer.

3. The window structure of claims 1 or 2, wherein the third glass layer is configured to be at least ten times more transmissive than soda lime glass with regard to at least one of 28 gigahertz, 37 gigahertz, 39 gigahertz, or 60 gigahertz.

4. The window structure of any of claims 1 to 3, wherein a product of (a) a square of a permeability of the third glass layer at a designated frequency that is included among the at least one frequency and (b) the thickness of the third glass layer equals approximately one-half of a wavelength that corresponds to a central frequency of the bandpass filter.

5. The window structure of any of claims 1 to 4, wherein the designated frequency passband of the bandpass filter includes a range of frequencies from 28 gigahertz to 60 gigahertz.

6. The window structure of any of claims 1 to 5, wherein the bandpass filter has a 3dB bandwidth greater than or equal to 0.8 gigahertz.

7. The window structure of any of claims 1 to 6, wherein the low-emissive coatings in the respective first and second coatings have respective first and second reflectivities with regard to infrared wavelengths; and
wherein an average of the first reflectivity and the second reflectivity is at least 90%.

8. A method of using a window structure having first, second, and third glass layers, the method comprising:

   receiving infrared radiation at a Fabry-Perot etalon, which is formed by the third glass layer and further by first and second low thermal emissivity coatings on respective first and second opposing surfaces of the third glass layer, via the first glass layer;

attenuating the infrared radiation using the first and second low thermal emissivity coatings;

receiving a signal having a frequency in a range of frequencies from 6 gigahertz to 80 gigahertz at the Fabry-Perot etalon via the first glass layer; and

passing the signal through the bandpass filter and the third glass layer based at least in part on the bandpass filter having a designated frequency passband that includes the frequency.

9. The method of claim 8, wherein receiving the infrared radiation comprises:
receiving the infrared radiation at the Fabry-Perot etalon via the first glass layer and a sealed gas-filled cavity that is formed between the first glass layer and the third glass layer.

10. The method of claims 8 or 9, wherein passing the signal through the bandpass filter comprises:
passing the signal through the bandpass filter, a sealed gas-filled cavity that is formed between the second glass layer and the third glass layer, and the third glass layer based at least in part on the designated frequency passband of the bandpass filter including the frequency.

100

FIG. 1

200

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

EP 4 242 410 A2

1700

Using a window structure having first, second, and third glass layers

1702

Receive infrared radiation at a Fabry-Perot etalon, which is formed by the third glass layer and further by first and second low thermal emissivity coatings on respective first and second opposing surfaces of the third glass layer, via the first glass layer

1704

Attenuate the infrared radiation using the first and second low thermal emissivity coatings

1706

Receive a signal having a frequency in a range of frequencies from 6 gigahertz to 80 gigahertz at the Fabry-Perot etalon via the first glass layer

1708

Pass the signal through the bandpass filter and the third glass layer based at least in part on the bandpass filter having a designated frequency passband that includes the frequency

End

FIG. 17

1800

Tx Antenna Gain (A$_{TX}$)

Free Space Propagation Loss (PL$_{FS}$)

Window Loss (PL$_W$)

1846

Rx Antenna Gain (A$_{RX}$)

1842

1844

Transmitter

Distance (D)

Receiver

Tx Power (P$_{TX}$)

Targeted Rx Sig Level (S$_{RX}$)

FIG. 18

FIG. 19

| Modulation | SNR, dB | Max Spectral Efficiency, bps/Hz |
|------------|---------|--------------------------------|
| QPSK | 5 | 2 |
| QAM-8 | 8 | 3 |
| QAM-16 | 12 | 4 |
| QAM-32 | 15 | 5 |
| QAM-64 | 18 | 6 |
| QAM-128 | 21 | 7 |
| QAM-256 | 24 | 8 |

FIG. 20

FIG. 21

## REFERENCES CITED IN THE DESCRIPTION

**Patent documents cited in the description**

- US 62649808